# EUROPÄISCHE PATENTANMELDUNG

(11) **EP 4 230 684 A1**
(43) Veröffentlichungstag der Anmeldung: **23.08.2023**
(21) Anmeldenummer: 22157595.4
(22) Anmeldetag: 18.02.2022
(51) Int. Cl.: C08J 5/04, C08J 5/18, D21H 21/14

(54) **VERBUNDMATERIAL MIT AROMATRÄGER**

(71) Anmelder: Salamander SPS GmbH & Co. KG, 86842 Türkheim (DE)
(72) Erfinder: SCHMIEDEKNECHT, Götz, 82166 Gräfelfing (DE)
(74) Vertreter: Schmid, Nils T.F.

(57) **Zusammenfassung**

Die vorliegende Erfindung betrifft ein Verbundmaterial, umfassend ein Fasermaterial und ein Bindemittel, wobei das Fasermaterial einen faserförmigen Aromaträger aufweist und/oder das Verbundmaterial zusätzlich zum Fasermaterial einen Aromaträger aufweist.

## Beschreibung

Die Erfindung betrifft ein Verbundmaterial, ein Erzeugnis, das das Verbundmaterial umfasst, sowie die Verwendung desselben und ein Verfahren zum Herstellen eines Verbundmaterials und des Erzeugnisses.

Es ist bekannt, Verbundmaterialien zur Wiederverwendung von Fasermaterial einzusetzen. Beispielsweise bei Falzspänen, Beschnitt- und Stanzabfällen aus der Lederverarbeitung besteht ein Problem darin, dass diese durch die bei der Gerbung eingesetzten Chemikalien nur unter Umweltbelastung entsorgbar sind.

Ein Verbundmaterial auf der Basis von Lederfasermaterial und Bindemitteln ist beispielsweise aus WO 2020/212062 bekannt. Darin wird das Fasermaterial mit Wasser und einem Bindemittel zu einem Faserbrei vermengt. Der Faserbrei wird anschließend auf einer Langsiebmaschine entwässert und in einem Trockenkanal getrocknet, wodurch aus dem Faserbrei ein flächiges Erzeugnis entsteht. Dieses kann beispielsweise zur Herstellung von Schuhkomponenten und zur Profilummantelung von Wandpanelen eingesetzt werden. Das Lederfasermaterial kann dabei aus Lederprodukten wiedergewonnen werden, indem diese zunächst über eine Schneidmühle in 5 bis 10 mm² große Stücke zerkleinert und anschließend mit Wasser in einem Refiner zu einem Faserbrei vermahlen werden.

Durch die Wiederverwertung von Lederprodukten in derartigem Verbundmaterial wird das Entsorgungsproblem von Lederprodukten teilweise angegangen. Die weltweit anfallenden Mengen an zu entsorgenden Lederprodukten und anderen zu entsorgenden Materialien ist jedoch deutlich größer als die Nachfrage nach Fasermaterial, insbesondere Lederfasermaterial, enthaltenden Verbundmaterialien, wie Lederfaserstoffe, in denen diese wiederverwendet werden können, sodass die damit einhergehenden Entsorgungsprobleme nur teilweise gelöst werden.

Eine Aufgabe der vorliegenden Erfindung besteht darin, die Nachteile aus dem Stand der Technik zu überwinden, insbesondere ein Verbundmaterial mit Fasermaterial und einem Bindemittel, ein Erzeugnis, das das Verbundmaterial umfasst, sowie die Verwendung desselben und ein Verfahren zum Herstellen eines Verbundmaterials und des Erzeugnisses bereitzustellen, das die Wahrnehmung von das Verbundmaterial umfassenden Produkten verändert, insbesondere positiv beeinflusst und/oder die Aufmerksamkeit von Personen auf das Produkt lenkt, insbesondere ohne die Eigenschaften des Verbundmaterials wesentlich zu beeinträchtigen und/oder bei gleichzeitiger Bereitstellung einer gewünschten Optik, insbesondere um die Nachfrage und/oder mögliche Einsatzgebiete derartiger Produkte zu steigern, insbesondere wobei aus dem Verbundmaterial hergestellte flächige Erzeugnisse sich hinsichtlich Biegsamkeit zumindest teilweise an die Charakteristika von Verbundmaterialien mit Lederfasern annähern sollen.

Die Aufgabe wird durch die Gegenstände der unabhängigen Ansprüche gelöst. Bevorzugte Ausführungen sind in den abhängigen Ansprüchen angegeben.

Die Erfindung betrifft ein Verbundmaterial umfassend ein Fasermaterial und ein Bindemittel. Gemäß einer Alternative dieses Aspekts der Erfindung umfasst das Fasermaterial einen faserförmigen Aromaträger. Gemäß einer weiteren Alternative umfasst das Verbundmaterial zusätzlich zum Fasermaterial einen Aromaträger.

Im Rahmen der vorliegenden Erfindung wurde erkannt, dass Verbundmaterialien mit einem Bindemittel und Fasermaterial nicht nur dazu verwendet werden können, die Materialeigenschaften von zwei oder mehr Komponenten in synergetischer Weise zu kombinieren, sondern auch deren Wahrnehmung durch potenzielle Kunden zu beeinflussen. Dadurch ergeben sich ungeahnte Möglichkeiten, neue Einsatzgebiete zu erschließen und die Nachfrage nach derartigen Verbundmaterialien zu steigern. Insbesondere wurde erkannt, dass Produkte mit erfindungsgemäßen Verbundwerkstoffen die Aufmerksamkeit von Personen auf das Produkt lenken können, was zu einem Kauf des Produktes führen kann. Dadurch kann die Nachfrage nach dem Verbundwerkstoff und somit der Anteil an Materialien, die auf diesem Wege wiederverwendet werden können, erhöht werden. Des Weiteren kann der Einsatz von derartigen Verbundmaterialien, beispielsweise zur Auskleidung von Räumen, die Erlebnisdimension von Personen erweitern. Beispielsweise kann in einem Cafe der Einsatz von Tapeten mit Kaffeesatz als Aromaträger die Erlebnisdimension des Konsumenten erweitern, einerseits durch olfaktorische Eigenschaften (Geruch), wie den Kaffeegeruch, andererseits durch optische Eigenschaften, wie die Wiedererkennung von Kaffeesatz an der Tapete beim Trinken eines aus Kaffee gebrühten Heißgetränks.

Die erfindungsgemäße Alternative mit dem zusätzlich zum Fasermaterial vorliegenden Aromaträger kann auch dahingehend formuliert werden, dass das Verbundmaterial einen fasermaterialfreien, anders ausgedrückt einen nicht faserförmigen, Aromaträger aufweist. Insbesondere kann der zusätzlich zum Ausgangsmaterial vorliegende Aromaträger pulverförmig sein und/oder als ätherisches Öl vorliegen. Ein Beispiel für einen pulverförmigen Aromaträger ist Kaffeepulver, insbesondere Kaffeesatz. Unter Kaffeesatz soll insbesondere Kaffeepulver zu verstehen sein, aus dem zumindest einmal Kaffee extrahiert wurde. Selbstverständlich können auch andere pulverförmige Aromaträger, wie weiter unten im Detail beschrieben, den Aromaträger bilden. Überraschenderweise wurde festgestellt, dass die Kombination von pulverförmigem Aromaträgern mit Fasermaterial und Bindemitteln einen flexiblen Verbundwerkstoff bereitstellen kann, der für die unten beschriebenen Einsatzgebiete geeignet ist. Insbesondere bei der Verwendung für Tapeten ist eine gewisse Flexibilität von Vorteil, um die Tapete aufrollen, abrollen und verarbeiten zu können. Insbesondere wurde festgestellt, dass ein zu geringer Faseranteil zu einer spröden, insbesondere unflexiblen, steifen und/oder brettartigen, Struktur führt, was die Eignung des Verbundwerkstoffs für einige Anwendungsgebiete ausschließt. Insbesondere das vollständige Fehlen von Fasermaterial führt zu einer sehr steifen Struktur, die in Ihren Einsatzgebieten eingeschränkt ist.

Insbesondere wurde erkannt, dass ein Anteil des Fasermaterials von wenigstens 20 Gew.-%, vorzugsweise wenigstens 30 Gew.-%, besonders bevorzugt wenigstens 40 Gew.-%, bezogen auf das Gesamtgewicht des Verbundmaterials, vorteilhaft ist, insbesondere um dem Verbundmaterial eine ausreichende Flexibilität und Festigkeit zu verleihen. Als besonders bevorzugt wurde ein Anteil des Fasermaterials von wenigstens 40 Gew.-%, bezogen auf das Gesamtgewicht des Verbundmaterials, erkannt, da dieser dem Verbundmaterial für im Wesentlichen alle der untenstehenden Anwendungsgebiete die nötige Flexibilität und/oder Festigkeit verleiht.

Vorzugsweise liegt ein Hauptfaseranteil von wenigstens 40 Vol.-% des Fasermaterials in einem Faserlängenbereich zwischen 0,2 mm und 2 mm vor. Vorzugsweise umfasst der Hauptfaseranteil wenigstens 45 Vol.-%, 55 Vol.-%, 60 Vol.-% oder 65 Vol.-% des Fasermaterials. Insbesondere umfasst der Hauptfaseranteil zwischen 40 Vol.-% und 100 Vol.-%, vorzugsweise zwischen 50 Vol.-% und 80 Vol.-%, besonders bevorzugt zwischen 60 Vol.-% und 70 Vol.-%, insbesondere etwa 65 Vol.-%, des Fasermaterials. Es hat sich herausgestellt, dass eine Faserlänge von mindestens 0,2 mm zu den oben genannten Gewichtsprozentangaben dem Verbundmaterial die nötige Festigkeit verleiht, um es für die nachfolgend beschriebenen Einsatzzwecke zu verwenden. Insbesondere kann durch den Hauptanteil von Fasern mit einer Mindestfaserlänge von 0,2 mm eine ausreichende Verhakung des Fasermaterials erzielt werden, um dem Verbundmaterial eine ausreichende Festigkeit und Flexibilität zur Verarbeitung in den nachfolgend beschriebenen Einsatzgebieten zu verleihen. Gleichzeitig ermöglicht die Mindestfaserlänge von 0,2 mm den Bindemittelanteil, bezogen auf das Gesamtgewicht des Verbundmaterials, möglichst gering zu halten, insbesondere unterhalb von 50 Gew.-%, 45 Gew.-%, 40 Gew.-%, 35 Gew.-%, 30 Gew.-% oder 25 Gew.-%, zu halten und somit einen höheren Anteil von CO₂ speicherndem Fasermaterialien in dem Verbundmaterial zu verwenden.

Insbesondere weist der Hauptfaseranteil einen unteren Hauptfaseranteil mit einem Faserlängenbereich zwischen 0,2 mm und 1,0 mm und einen oberen Hauptfaseranteil mit einem Faserlängenbereich zwischen mehr als 1,0 mm und 2,0 mm auf. Insbesondere liegt der untere Hauptfaseranteil zu wenigstens 40 Vol.-%, 50 Vol.-%, 60 Vol.-%, 65 Vol.-% oder 70 Vol.-% des Hauptfaseranteils vor und/oder der obere Hauptfaseranteil zu wenigstens 5 Vol.-%, 10 Vol.-%, 20 Vol.-%, 25 Vol.-% oder 30% Vol.-% des Hauptfaseranteils vor. Insbesondere beträgt das Volumenverhältnis von unterem Hauptfaseranteil zu oberen Hauptfaseranteil zwischen 1:1 und 3:1, vorzugsweise zwischen 1,5:1 und 2,5:1, besonders bevorzugt zwischen 1,8:1 und 2,2:1. Beispielsweise kann der untere Hauptfaseranteil zu 45 Vol.-% des Fasermaterials und der obere Hauptfaseranteil zu 20 Vol.-% des Fasermaterials vorliegen.

Bezüglich der oberen Grenze des Hauptfaseranteils hat sich herausgestellt, dass Fasern mit dieser Länge nahezu keine Weiterverwendungsmöglichkeit in bekannten Recyclingprodukten finden. Insbesondere für die Papierherstellung und die Garnherstellung sind in der Regel längere Fasern, für Letztere insbesondere mit einer Länge von mehr als 25 mm, erforderlich. Daher konnten insbesondere Kämmlinge, Grundbaumwolle, Kardenrückständen, Schlichtfasern, Reißfasern, Papierfasermaterial und/oder Spelzfasermaterial in dem Faserlängenbereich des Hauptfaseranteils vor der vorliegenden Erfindung kaum wiederverwendet werden. Insofern erschließt die vorliegende Erfindung einen gänzlich neuen Anwendungsbereich für Fasermaterialien, die zuvor den nicht wiederverwertbaren Rückständen zugeführt und kompostiert werden mussten. Insbesondere können deutlich höherwertige Einsatzgebiete für derartige Faserlängenbereiche zwischen 0,2 mm und 2,0 mm erzielt werden als die bisher bekannten, die sich insbesondere auf kurzlebige Produkte wie Putzwolle und Malervlies beschränken.

Insbesondere hat sich eine Mindestfaserlänge von 0,2 mm als vorteilhaft für die erforderliche Verzweigung der Fasern zu einem Faservlies herausgestellt. Es hat sich jedoch auch gezeigt, dass zu lange Fasern dazu neigen Faserklumpen zu bilden, die der Bildung eines homogenen Faservlieses entgegenstehen. In der Papierindustrie wird das Problem der Faserklumpen durch einen sehr dünnflüssigen Faserbrei mit einem Gewichtsverhältnis von Fasermaterial zu Wasser von etwa 1 zu 1000 gelöst. Dies führt zu einem hohen Wasserverbrauch. Auch der zum Trocknen erforderliche Energiebedarf ist auf Grund des hohen Wassergehalts unbefriedigend hoch. Es hat sich herausgestellt, dass durch einen hohen Faseranteil von Fasern mit einer maximalen Faserlänge von maximal 5 mm Verklumpungen mit deutlich geringeren Wassermengen, insbesondere mit einem Gewichtsverhältnis von Fasermaterial zu Wasser zwischen 10 zu 1000 und 30 zu 1000, vermieden werden können. Dadurch kann der Wasserverbrauch um den Faktor 10 bis 30 und damit auch die für das Trocknen erforderliche Energie reduziert werden. Demnach hat es sich als bevorzugt herausgestellt, dass das Verbundmaterial wenigstens 40 Vol.-%, besonders bevorzugt wenigstens 50 Vol.-%, 60 Vol.-%, 70 Vol.-%,8o Vol.-% oder 90 Vol.-%, noch bevorzugter wenigstens 92 Vol.-%, 94 Vol.-%, 96 Vol.-%, 98 Vol.-%, 99 Vol.-% oder 99,5 Vol.-% an Fasern mit einer Faserlänge von maximal 5 mm aufweist.

Es hat sich ferner als bevorzugt herausgestellt, dass ein Kurzfaseranteil von wenigstens 5 Vol.%, insbesondere von wenigstens 10 Vol.-%, 15 Vol.-% 20 Vol.-% oder 25 Vol.-%, des Fasermaterials eine Faserlänge von weniger als 0,2 mm aufweist, insbesondere in einem Faserlängenbereich zwischen 0,02 mm und weniger als 0,2 mm liegt. Vorzugsweise beträgt der Kurzfaseranteil höchstens 40 Vol.-%, höchstens 35 Vol.-%, 30 Vol.-% oder 25 Vol.-%, des Fasermaterials. Vorzugsweise weist das Fasermaterial den Kurzfaseranteil zu wenigstens 5 Vol.-% und höchstens 40 Vol.-%, besonders bevorzugt zwischen 10 Vol.-% und 35 Vol.-%, noch bevorzugter zwischen 20 Vol.-% und 30 Vol.-%, beispielsweise zu 25 Vol.-%, des Fasermaterials auf. Die Erfinder haben erkannt, dass selbst mit dem zuvor beschriebenen Kurzfaseranteilen noch Verbundmaterialien hergestellt werden können, die für die unten beschriebenen Einsatzzwecke geeignet sind. Dadurch kann zumindest ein Anteil von besonders niederwertigem Fasermaterial in dem erfindungsgemäßen Verbundmaterial wiederverwendet werden, was dessen Umweltverträglichkeit erhöht.

Als besonders bevorzugt wurde die Kombination des zuvor beschriebenen Hauptfaseranteils mit dem Kurzfaseranteil erkannt, insbesondere wobei das Volumenverhältnis von Hauptfaseranteil zu Kurzfaseranteil zwischen 1:1 und 5:1, vorzugsweise zwischen 1,5:1 und 4:1, besonders bevorzugt zwischen 2:1 und 3:1, beträgt. Beispielsweise kann der Hauptfaseranteil zu 65 Vol.-% des Fasermaterials und der Kurzfaseranteil zu 25 Vol.-% des Fasermaterials vorliegen.

Es hat sich herausgestellt, dass insbesondere die Kombination aus dem Bindemittel in den nachfolgend beschriebenen Mengenanteilen, dem zuvor definierte Hauptfaseranteil und dem zuvor beschriebenen Kurzfaseranteil ein Verbundmaterial bereitstellt, das einen hohen Anteil an anderweitig kaum wiederverwertbaren Materialien aufweist und für die unten beschriebenen Zwecke geeignet ist.

Es hat sich ferner als bevorzugt herausgestellt, dass ein Langfaseranteil von wenigstens 5 Vol.-%, insbesondere von wenigstens 6 Vol.-%, 7 Vol.-%, 8 Vol.-%, 9 Vol.-% oder 10 Vol.-%, des Fasermaterials eine Faserlänge von mehr als 2 mm aufweist, insbesondere in einem Faserlängenbereich zwischen mehr als 2 mm und maximal 5 mm liegt. Insbesondere beträgt der Langfaseranteil höchstens 20 Vol.-%, vorzugsweise höchstens 18 Vol.-%, 16 Vol.-%, 14 Vol.-%, 12 Vol.-% oder 10 Vol.-%. des Fasermaterials.

Es hat sich herausgestellt, dass Fasern mit einer Länge von mehr als 2 mm das Verbundmaterial weich machen. Die oben beschriebenen Mindestvolumenanteile haben sich hierzu als bevorzugt herausgestellt. Um die zuvor beschriebenen, mit längeren Fasern einhergehenden, Verklumpungen und den damit einhergehenden großen Wasserverbrauch weitestgehend zu vermeiden hat es sich als bevorzugt erwiesen, die oben beschriebenen Maximalvolumenanteile einzuhalten. Des Weiteren hat sich gezeigt, dass die gewünschte Weichheit bereits mit Faserlängen zwischen 2 mm und 4 mm erreichbar ist. Insofern hat es sich als bevorzugt erwiesen, den Langfaseranteil auf Fasern zu beschränken die maximal 5 mm lang sind. Als besonders bevorzugt hat es sich erweisen, dass wenigstens 50 Vol.-%, 60 Vol.-%, 70 Vol.-%, 80 Vol.-% oder 90 Vol.-% des Langfaseranteils in einem Faserlängenbereich von mehr als 2 mm und maximal 4 mm liegen und/oder maximal 10 Vol.-% des Langfaseranteils in einem Faserlängenbereich von mehr als 4 mm und maximal 5 mm liegen. So hat sich Beispielsweise eine Verteilung von etwa 9 Vol.-% des Fasermaterials in einem Faserlängenbereich von mehr als 2 mm und maximal 4 mm und von etwa 0,7 Vol.-% des Fasermaterials in einem Faserlängenbereich von mehr als 4 mm und maximal 5 mm als vorteilhaft erwiesen.

Als besonders bevorzugt hat sich die Kombination des zuvor beschriebenen Hauptfaseranteils, des Kurzfaseranteils und/oder des Langfaseranteil herausgestellt. Eine bevorzugte Kombination sieht vor, zwischen 60 und 70 Vol.-% des Fasermaterials durch den Hauptfaseranteil und zwischen 5 und 10 Vol.-% des Fasermaterials durch den Langfaseranteil auszubilden. Eine besonders bevorzugte Kombination sieht vor zwischen 20 und 30 Vol.-% des Fasermaterials durch den Kurzfaseranteil, zwischen 60 und 70 Vol.-% des Fasermaterials durch den Hauptfaseranteil und zwischen 5 und 10 Vol.-% des Fasermaterials durch den Langfaseranteil auszubilden. Beispielsweise können etwa 25 Vol.-% des Fasermaterials durch den Kurzfaseranteil, 65 Vol.-% des Fasermaterials durch den Hauptfaseranteil und 9,7 Vol.-% des Fasermaterials durch den Langfaseranteil ausgebildet werden. Die verbleibenden 0,3 Vol.-% können beispielsweise durch Fasern mit einer Länge von mehr als 5 mm ausgebildet werden.

Die zuvor beschriebenen Volumenanteile der Faserlängenverteilung können insbesondere mittels dynamischer Bildanalyse, beispielsweise gemäß ISO 13322-2:2006, ermittelt werden. Die Messung kann während der Herstellung des Verbundmaterials erfolgen, beispielsweise kann nach dem Zerkleinern von Fasermaterial, insbesondere durch einem Refiner, und/oder vor dem Trocknen des das Fasermaterial enthaltenden Gemisches, eine Stichprobe entnommen und mittels dynamischer Bildanalyse gemessen werden. Die Messung kann aber auch auf Basis von bereits getrocknetem Verbundmaterialien und/oder von das Verbundmaterial enthaltenden Erzeugnissen erfolgen. Dafür kann das Verbundmaterial beispielsweise über ein geeignetes Lösungsmittel wieder in ein insbesondere flüssiges Gemisch überführt werden und anschließend mittels dynamischer Bildanalyse die Faserlängenverteilung gemessen werden. Unter Annahme einer gleichen Dichte für alle Fasern entspricht der Massenanteil dem Volumenanteil. Es sei klar, dass die zuvor und nachfolgend beschriebenen Volumenanteile bzgl. der Faserlängen alternativ auch als Massenanteile realisiert werden können. Insbesondere sollen die beanspruchten Volumenanteile alternativ als Massenanteile beansprucht werden können.

Vorzugsweise beträgt der Anteil des zusätzlich zum Fasermaterial vorliegenden Aromaträgers, insbesondere pulverförmigen Aromaträgers, zwischen 5 und 60 Gew.-%, vorzugsweise zwischen 10 und 50 Gew.-%, besonders bevorzugt zwischen 20 und 40 Gew.-%, bezogen auf das Gesamtgewicht des Verbundmaterials. Insbesondere bei zusätzlich zum Fasermaterial vorliegendem Aromaträgern, die nicht faserförmig sind, hat es sich als vorteilhaft herausgestellt, einen Mindestanteil von 20 Gew.-%, 30 Gew.-%, besonders bevorzugt von wenigstens 40 Gew.-%, Fasermaterial einzusetzen, um dem Verbundmaterial die nötige Festigkeit und/oder Flexibilität zu verleihen. Insbesondere beträgt das Gewichtsverhältnis von dem Fasermaterial zu dem zusätzlich zum Fasermaterial vorliegendem Aromaträger zwischen 2:1 und 1:2, vorzugsweise zwischen 1,8:1 und 1:1,8, besonders bevorzugt zwischen 1,5:1 und 1:1,5, 1,3:1 und 1:1,3 oder 1,1:1 und 1:1,1, beträgt. Beispielsweise kann das Gewichtsverhältnis von dem Fasermaterial zu dem zusätzlich zum Fasermaterial vorliegendem Aromaträger 1:1 betragen. Besonders bevorzugt weist ein Verbundmaterial einen Bindemittelanteil von 20 bis 35 Gew.-%, insbesondere von 25 bis 35 Gew.-%, einen pulverförmigen Aromaträgeranteil von 20 bis 40 Gew.-%, insbesondere von 25 bis 35 Gew.-%, und einen Fasermaterialanteil von 20 bis 40 Gew.-%, insbesondere von 25 bis 35 Gew.-%, jeweils bezogen auf das Gesamtgewicht des Verbundmaterials, auf. Beispielsweise können Bindemittel, Fasermaterial und pulverförmiger Aromaträger in einem Gewichtsverhältnis von etwa 1:1:1 vorliegen.

Dadurch kann einerseits gewährleistet werden, dass ausreichend Fasermaterial eingesetzt werden kann, um dem Verbundmaterial die nötige Festigkeit zu verleihen, und ausreichend Bindemittel eingesetzt werden kann, um dem Verbundmaterial die nötige Flexibilität zu verleihen, insbesondere einen polymergebundenen Vliesstoff bereitzustellen. Andererseits kann eine ausreichend große Menge von Aromaträgern eingesetzt werden, um dem Verbundwerkstoff einen ausreichend starken Geruch zu verleihen und/oder das Aussehen des Verbundmaterials an den eines natürlichen Aromaträgers, wie Kaffeepulver, anzunähern. Ferner kann durch diese erfindungsgemäße Alternative das Spektrum des einzusetzenden Aromaträgers auch auf nicht faserförmige Aromaträger ausgeweitet werden.

Gemäß einer besonders bevorzugten Ausführungsform weist der zusätzlich zum Fasermaterial vorliegenden Aromaträger einen pulverförmigen Aromaträger, insbesondere Kaffeepulver, auf. Insbesondere beträgt der Anteil des pulverförmigen Aromaträgers, insbesondere des Kaffeepulvers, wenigstens 20 Gew.- %, 30 Gew.-%, 40 Gew.-%, 50 Gew.-%, 60 Gew.-%, 70 Gew.-%, 80 Gew.-%, 90 Gew.-%, 95 Gew.-%, oder 99 Gew.-%, bezogen auf das Gesamtgewicht des zusätzlich zum Fasermaterial vorliegenden Aromaträgers. Insbesondere Kaffeepulver fällt täglich weltweit in großen Mengen an. Kaffeepulver weist insbesondere einen gewissen Ölgehalt und phytotoxische Stoffe auf, welche nur langsam kompostierbar sind und wachstumshemmend in dem daraus entstehenden Kompost wirken. Daher wird Kaffeepulver nach dessen Extraktion in der Regel verbrannt, wodurch Treibhausgase entstehen. Außerdem führt der Wassergehalt in dem extrahierten Kaffeepulver (Presskuchen) zu einem geringen Energiegewinn durch den Verbrennungsprozess. Die Möglichkeit, Kaffeepulver in dem erfindungsgemäßen Verbundmaterial wiederzuverwerten löst dieses Entsorgungsproblem von Kaffeepulver.

Alternativ oder zusätzlich zum Einsatz eines pulverförmigen Aromaträgers als zusätzlich zum Fasermaterial vorliegender Aromaträger kann ätherisches Öl eingesetzt werden. Dadurch kann die Geruchsintensität des Verbundmaterials gesteigert und/oder der Geruch des Verbundmaterials beeinflusst werden. Insbesondere kann der zusätzlich zum Fasermaterial vorliegende Aromaträger aus ätherischem Öl bestehen. Als ätherische Öle kommen insbesondere aus Blüten, Samen, Früchten, Blüten und/oder Gemüse, gewonnene ätherische Öle, insbesondere Parfüme, in Betracht. Vorzugsweise umfasst, insbesondere besteht, das ätherische Öl aus Jasminöl, Minzöl, Lavendelöl, Nelkenöl, Zitronenöl und/oder Rosenöl. Dadurch kann der Gewichtsanteil des Aromaträgers, bezogen auf das Gesamtgewicht des Verbundmaterials, im Vergleich zu einem pulverförmigen Aromaträger unter Aufrechthaltung einer gewünschten Geruchsintensität reduziert werden. Dadurch können größere Mengen an Fasermaterial und/oder Bindemittel zur optimalen Einstellung gewünschter Materialeigenschaften gewählt werden. Ferner kann die Auswahl des Fasermaterials an das regional und/oder saisonal zur Verfügung stehende Fasermaterial angepasst werden. So kann beispielsweise im Sommer pflanzliches Fasermaterial, das von der Ernte und Verarbeitung von Pflanzen als Rückstand übrigbleibt, als Basis für das Fasermaterial verwendet werden, und im Winter textile Rückstände, wie Textilien aus Leder, Baumwolle, Tierwolle und/oder Seide, als Basis für das Fasermaterial verwendet werden. Dadurch kann die biologische Verträglichkeit des Verbundmaterials über den Einsatz von Rückständen hinaus durch die Berücksichtigung deren saisonaler und regionaler Verfügbarkeit erhöht werden.

Die erfindungsgemäße Alternative mit faserförmigen Aromaträgern kann auch dahingehendend formuliert werden, dass das Fasermaterial selbst zumindest teilweise ein Aromaträger ist. Vorzugsweise beträgt bei dieser Alternative der Anteil des faserförmigen Aromaträgers wenigstens 20 Gew.- %, 30 Gew.-%, 40 Gew.-%, 50 Gew.-%, 60 Gew.-%, 70 Gew.-%, 80 Gew.-%, 90 Gew.-%, 95 Gew.-%, oder 99 Gew.-%, bezogen auf das Gesamtgewicht des Fasermaterials. Ein Ausführungsbeispiel hierfür stellt beispielsweise Fasermaterial dar, das aus zerkleinerten Teeblättern gewonnen wird, wobei die Teeblätter lediglich so weit zerkleinert werden, dass sie noch Fasermaterial bilden. Anders ausgedrückt wird der Aromaträger bei dieser Ausführungsform zumindest nicht vollständig zu Pulver zerkleinert. Selbstverständlich können auch andere Fasermaterialien, wie weiter unten im Detail beschrieben, den Aromaträger bilden. Ein Vorteil derartiger Ausführungen besteht insbesondere darin, dass ein hoher Anteil an Aromaträgern, insbesondere von bis zu 80 Gew.-%, bezogen auf das Gesamtgewicht des Verbundmaterials, eingesetzt werden kann. Insbesondere beträgt der Anteil des Fasermaterials, bezogen auf das Gesamtgewicht des Verbundmaterials, wenigstens 20 Gew.-%, 30 Gew.-%, 40 Gew.-%, 50 Gew.-%, oder 60 Gew.-% und/oder höchstens 95 Gew.-%, 90 Gew.-%, 80 Gew.-%, 70 Gew.-% oder 65 Gew.-%. Vorzugsweise kann der Anteil des Fasermaterials 20 bis 80 Gew.-%, vorzugsweise 25 bis 70 Gew.-%, besonders bevorzugt 30 bis 60 Gew.-%, 30 bis 50 Gew.-% oder 60 bis 70 Gew.-%, bezogen auf das Gesamtgewicht des Verbundmaterials, betragen. Besonders bevorzugt weist ein Verbundmaterial einen Bindemittelanteil von 20 bis 35 Gew.-% und einen Fasermaterialanteil, der einen faserförmigen Aromaträger aufweist, von 30 bis 70 Gew.-%, insbesondere von 30 bis 60 Gew.-% oder von 60 bis 70 Gew.-%, jeweils bezogen auf das Gesamtgewicht des Verbundmaterials, auf.

Dadurch kann insbesondere der von dem Aromaträger abgegebene Geruch verstärkt werden und/oder das Erscheinungsbild des Verbundmaterials stärker an den eines natürlichen Aromaträgers, wie Teeblätter, herankommen.

Als bevorzugtes Gewichtsverhältnis von Fasermaterial zu Bindemittel hat sich, insbesondere beim Einsatz eines faserförmigen Aromaträgers, ein Verhältnis zwischen 1/1 und 3/1, besonders bevorzugt zwischen 1.5/1 und 2.5/1 oder zwischen 1.7/1 und 2.2/1, beispielsweise von 2/1, herausgestellt.

Es sei klar, dass die im Zusammenhang mit der erfindungsgemäßen Alternative des Einsatzes von zusätzlich zum Fasermaterial vorliegenden Aromaträger beschriebenen Fasermengenanteile und/oder Faserlängenbereiche auch für die Alternative mit faserförmigen Aromaträger gelten können und umgekehrt, wobei insbesondere der Anteil des Fasermaterials gemäß der Alternative mit faserförmigem Aromaträger der Summe der Anteile des Fasermaterials und des zusätzlichen Aromaträgers gemäß der Alternative mit zusätzlich zum Fasermaterial vorliegenden Aromaträger betragen kann. Ferner sei klar, dass auch die Kombination der erfindungsgemäßen Alternativen in einem Verbundmaterial möglich ist. Beispielsweise kann ein Verbundmaterial einen Bindemittelanteil zwischen 20 und 35 Gew.-%, einen faserförmigen Aromaträgeranteil zwischen 20 und 40 Gew.-% und einen zusätzlich zum faserförmigen Aromaträgeranteil vorliegenden Aromaträgeranteil zwischen 20 und 40 Gew.-%, jeweils bezogen auf das Gesamtgewicht des Verbundmaterials aufweisen. Dabei kann der zusätzlich zum faserförmigen Aromaträgeranteil vorliegende Aromaträgeranteil einen pulverförmigen Aromaträger und/oder ein ätherisches Öl aufweisen.

Wie zuvor beschrieben kann der Aromaträger insbesondere faserförmig, pulverförmig und/oder in Form von ätherischem Öl vorliegen. Unabhängig von der Form, in der der Aromaträger vorliegt, ist unter einem Aromaträger im Sinne der vorliegenden Erfindung insbesondere ein Trägermaterial zu verstehen, das Aromastoffe trägt (aktiver Aromaträger) und/oder getragen hat (passiver Aromaträger).

Ein aktiver Aromaträger kann insbesondere aromastofftragendes Trägermaterial, aus aromastofftragendem Trägermaterial gewonnenes ätherisches Öl, und/oder Rückstände von aromastofftragendem Trägermaterial aufweisen, insbesondere daraus bestehen. Rückstände können insbesondere Pressrückstände, Extraktionsrückstände und/oder Destillationsrückstände, insbesondere Kaffeesatz, aufweisen, insbesondere daraus bestehen. Insbesondere kann unter einem aktiven Aromaträger ein Aromaträger zu verstehen sein, der Aromastoffe in einer derartigen Konzentration aufweist, dass der Aromastoff von Menschen, insbesondere durchschnittlichen Probanden, wahrgenommen werden kann. Zur Ermittlung, ob es sich um einen passiven oder aktiven Aromaträger handelt, ist insbesondere dessen Geruchswahrnehmung in dem Verbundmaterial bzw. in dem dieses umfassende Erzeugnis oder die Menge von aus dem Erzeugnis isolierbaren Aromastoffen im Verhältnis zu deren Geruchsschwelle relevant. Hierzu können dem Fachmann bekannte Methoden, wie der Abgleich von Geruchsschwellen mit Aromastoffkonzentrationen oder Tests mit Probanden eingesetzt werden. Beispielsweise kann eine Geruchsprüfung gemäß VDA 270 erfolgen. Insbesondere kann durch Geruchsprüfer eine Einteilung mittels Bewertungsskale zwischen 1 (nicht wahrnehmbar) und 6 (unerträglich) erfolgen. Unter einem aktiven Aromaträger kann insbesondere ein Aromaträger zu verstehen sein, dessen Geruch ein Geruchsprüfer in dem Verbundmaterial in der Bewertungsskale mit einem Wert von mindestens 2, vorzugsweise von mindestens 3, einstuft. Alternativ oder zusätzlich können die flüchtigen Substanzen aus dem Verbundmaterial oder dem Aromaträger isoliert werden, beispielsweise über Destillations- und/oder Extraktionsverfahren. Anschließend können die flüchtigen Substanzen, insbesondere mittels Gaschromatographen, aufgetrennt werden. Anschließend können die aufgetrennten Substanzen mit Hilfe eines Massenspektrometers identifiziert werden. Durch Abgleich mit Aromastoff-Datenbanken kann dann ermittelt werden, ob die flüchtigen Substanzen Aromastoffe enthalten. Durch Abgleich der Menge der Aromastoffe mit bekannten Geruchsschwellen kann ermittelt werden, ob die Menge ausreicht, um von dem Probanden wahrnehmbar zu sein. Dabei kann der Fachmann insbesondere auf DIN-Norm EN 13725 und die darin definierten Testbedingungen zurückgreifen. Ersetzt man das Massenspektrometer durch die Nase eines Probanden kann man erkennen, ob der Proband den Geruch des isolierten Aromastoffs wahrnimmt.

Alternativ kann ein aktiver Aromaträger aber auch im weitesten Sinne als ein Trägermaterial zu verstehen sein, das wenigstens einen Aromastoff, insbesondere wenigstens einen der nachfolgend beschriebenen Aromastoffe, insbesondere Aromastoffe mit einer maximalen Geruchsschwelle, Schlüsselaromastoffe und/oder Aromastoffe bestimmter Herkunft, aufweist.

Ein passiver Aromaträger kann insbesondere ein Trägermaterial sein, der einmal Aromastoffe getragen hat, inzwischen aber frei von Aromastoffen ist und/oder eine so geringe Konzentration von Aromastoffen aufweist, dass die Aromastoffe von Menschen, insbesondere durchschnittlichen Probanden, nicht mehr wahrgenommen werden können. Hierzu kann insbesondere eines oder mehrere der zuvor beschriebenen Testverfahren eingesetzt werden. Ein passiver Aromaträger kann beispielsweise durch entsprechende intensive und/oder repetitive Anwendung von Press-, Extraktions- und/oder Destillationsverfahren bereitgestellt werden. Passive Aromaträger können aber auch dadurch entstehen, dass die Aromastoffe des Aromaträgers sich mit der Zeit verflüchtigen.

Vorzugsweise umfasst das Verbundmaterial Aromastoffe, insbesondere Aromastoffe in einer Konzentration, in der Sie von Menschen wahrnehmbar sind. Um eine entsprechend notwendige Konzentration zu ermitteln kann der Fachmann insbesondere auf die Geruchsschwellen der entsprechenden Aromastoffe zurückgreifen und/oder die zuvor beschriebenen Tests durchführen. Die Aromastoffe können in dem Aromaträger gebunden sein und/oder durch die Herstellung des Verbundmaterials zumindest teilweise aus dem Aromaträger gelöst sein und in dem Fasermaterial und/oder dem Bindemittel gebunden sein.

Vorzugsweise handelt es sich bei den Aromastoffen um natürliche Aromastoffe. Unter natürlichen Aromastoffen sollen insbesondere natürliche Aromastoffe gemäß EG-Verordnung Nr. 1334/2008 der Europäischen Parlaments und des Rates vom 16. Dezember 2008 zu verstehen sein.

Alternativ oder zusätzlich umfassen die Aromastoffe Aromastoffe der Stoffklasse der Aromaten, Ester, Terpene, Alkylpyrazine, Aldehyde, Ketone oder Mischungen von zwei oder mehreren davon, insbesondere bestehen daraus.

Alternativ oder zusätzlich umfassen die Aromastoffe Aromastoff mit einer Geruchsschwelle von weniger als 20 µg/m³, vorzugsweise von weniger als 15, 10 oder 7,5 µg/m³, insbesondere bestehen daraus. Die Geruchsschwelle kann insbesondere gemäß DIN-Norm EN 13725 gemessen werden.

Alternativ oder zusätzlich weisen die Aromastoffe wenigstens einen Schlüsselaromastoff auf. Insbesondere weist der Schlüsselaromastoff wenigstens einen oder eine Mischung aus einen oder mehreren Schlüsselaromastoffen der nachfolgend beschriebenen Trägermaterialien auf. Insbesondere weist der Aromastoff wenigstens einen Aromastoff auf, der ausgewählt ist aus (R)-Limonen, (S)-Limonen, Thioterpineol, Benzaldehyd, Citral, insbesondere Neral/Geranial, Himbeerketon, (R)-(-)-1-Octen-3-ol, (E,Z)-Nona-2,6-dienal, Geosmin, Filberton, 2-Furfurylthiol, Furaneol, insbesondere 4-Hydroxy-2,5-dimethyl-3(2H)-furanon, 2-Acetyl-1-pyrrolin, Isopentylacetat, 2-Methylbuttersäureethylester oder Mischungen von zwei oder mehreren davon, insbesondere daraus besteht.

Vorzugsweise weist der Aromaträger biogenes, vorzugsweise pflanzliches, Trägermaterial, auf. Unter einem biogenen Aromaträger ist insbesondere Trägermaterial zu verstehen, das biogenen Ursprungs ist. Insbesondere ist unter biogenem Trägermaterial Trägermaterial zu verstehen, das frei von synthetischen Syntheseverfahren gewinnbar ist, insbesondere bereitgestellt wurde. Vorzugsweise beträgt der Anteil des biogenen, insbesondere pflanzlichen, Trägermaterials wenigstens 20 Gew.- %, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Aromaträgers. Unter dem Gesamtgewicht des Aromaträgers ist im Sinne der vorliegenden Erfindung bei Ausführungsformen mit faserförmigem und zusätzlich zum Fasermaterial vorliegenden Aromaträger, die Summe des Gewichts beider Aromaträger zu verstehen. Vorteilhaft an der Wahl von pflanzlichem Trägermaterial für den Aromaträger ist insbesondere dessen biologische Abbaubarkeit, das dadurch erzeugte vegane Aussehen (auf vegane Bestandteile verweisendes Aussehen / vegane Eindruck) sowie die Vielzahl von als angenehm wahrgenommenen Düften, die insbesondere Aromastoffe von Pflanzen verbreiten.

Vorzugsweise umfasst das biogene Trägermaterial natürliches Trägermaterial, insbesondere besteht daraus. Unter natürlichem Trägermaterial ist insbesondere biogenes Trägermaterial zu verstehen, das in der Natur natürliche Aromastoffe trägt. Insbesondere umfassen die natürlichen Aromastoffe eines oder mehrere der zuvor beschriebenen Aromastoffe. Vorteilhaft an der Wahl von natürlichem Trägermaterial ist insbesondere, dass dadurch auf die Zugabe von Aromastoffen verzichtet werden kann.

Insbesondere weist der Aromaträger aus Samen, Gewürzen, Früchten, Blüten und/oder Gemüse gewonnenes, insbesondere biogenes, Trägermaterial, insbesondere Kaffeepulver, auf, insbesondere besteht daraus. Vorteilhaft an derartigen Trägermaterialien ist, dass Sie in der Regel als angenehm empfundene Aromastoffe aufweisen, sodass auf die Zugabe von Aromastoffen verzichtet werden kann. Vorzugsweise beträgt der Anteil von derartigem Trägermaterial wenigstens 20 Gew.- %, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Aromaträgers.

Insbesondere umfasst das aus Samen gewonnene Trägermaterial aus Kaffeebohnen, Rapssamen, Leinsamen, Mohnsamen, Sojasamen, Sonnenblumensamen oder Mischungen von zwei oder mehreren davon gewonnenes Trägermaterial, insbesondere besteht daraus.

Insbesondere umfasst das aus Gewürzen gewonnene Trägermaterial aus Vanilleschoten, Kümmel, Minze oder Mischungen von zwei oder mehreren davon gewonnenes Trägermaterial, insbesondere besteht daraus.

Insbesondere umfasst das aus Früchten gewonnene Trägermaterial aus Nüssen, Beeren, Äpfeln, Bananen, Ananas, Pfirsich, Orangen, Oliven, Mandarinen, Trauben, Limetten, Zitronen oder Mischungen von zwei oder mehreren davon gewonnenes Trägermaterial, insbesondere besteht daraus.

Insbesondere umfasst das aus Gemüse gewonnene Trägermaterial aus Karotten, Tomaten oder Mischungen von zwei oder mehreren davon gewonnenes Trägermaterial, insbesondere besteht daraus.

Insbesondere umfasst das aus Blüten gewonnene Trägermaterial aus Jasmin, Lavendel, Nelken, Rosen oder Mischungen von zwei oder mehreren davon gewonnenes Trägermaterial, insbesondere besteht daraus.

Vorzugsweise wird der Aromaträger, insbesondere dessen Trägermaterial, aus Rückständen, insbesondere Pressrückstände, Extraktionsrückstände und/oder Destillationsrückstände, gewonnen. Insbesondere beträgt der Anteil von aus Rückständen gewonnenem Trägermaterial wenigstens 20 Gew.- %, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Aromaträgers.

Insbesondere umfassen Pressrückstände Rückstände von der Herstellung von pflanzlichen Ölen und/oder von der Herstellung und/oder Verarbeitung von Lebensmittelen, insbesondere bestehen daraus. Rückstände von der Herstellung von pflanzlichen Ölen umfassen insbesondere Rückstände von Ölfrüchten, insbesondere Oliven und/oder Nüssen, und/oder Ölsaaten, insbesondere Lein, Mohn, Raps, Soja und/oder Sonnenblumen. Rückstände von der Herstellung und/oder Verarbeitung, insbesondere Saftpressung, von Lebensmitteln umfassen insbesondere Rückstände von Früchten, insbesondere von Beeren, Äpfeln, Bananen, Ananas, Pfirsich, Orangen, Mandarinen, Trauben, Limetten und/oder Zitronen, und/oder von Gemüse, insbesondere von Karotten und/oder Tomaten.

Insbesondere umfassen Extraktionsrückstände Rückstände von der Zubereitung von Heißgetränken, von der Herstellung von ätherischem Öl und/oder Parfüm, und/oder von der Herstellung von Aromen. Extraktionsrückstände von der Zubereitung von Heißgetränken können insbesondere Extraktionsrückstände von Kaffee und/oder Tee aufweisen, die insbesondere auch als Kaffeesatz oder Teetrester bezeichnet werden können. Extraktionsrückstände von der Herstellung von ätherischem Öl und/oder Parfüm, können insbesondere Extraktionsrückstände von Jasmin aufweisen. Extraktionsrückstände von der Herstellung von Aromen, insbesondere von Vanilleextrakt, können insbesondere Extraktionsrückstände von Vanilleschoten aufweisen.

Insbesondere umfassen Destillationsrückstände Rückstände von der Herstellung von ätherischem Öl und/oder Parfüm, wie Destillationsrückstände von Minze, Lavendel, Nelken und/oder Rosen.

Neben der positiven Beeinflussung der Wahrnehmung des Verbundmaterials hinsichtlich Geruch und Optik wird durch den Einsatz von Rückständen insbesondere die ökologische Nachhaltigkeit des Verbundmaterial durch den Einsatz von Rückständen erhöht. Insbesondere bei pflanzlichem Trägermaterial wird dadurch eine frühzeitige Kompostierung und die damit einhergehende frühzeitige Emission von Treibhausgasen vermieden. Insbesondere vor dem Hintergrund, dass die Menschheit Ihre Treibhausgasemissionen voraussichtlich erst langfristig auf ein klimaneutrales Niveau senken wird, kann die mit der vorliegenden Erfindung ermöglichte "Zwischenlagerung" von gebundenem CO₂, beispielsweise in Form von Kaffeesatz, der in dem Verbundmaterial verarbeitet wird, zur Bekämpfung der Erderwärmung beitragen.

Wie zuvor beschrieben kann der Aromaträger, insbesondere das Trägermaterial, insbesondere faserförmig, pulverförmig und/oder in Form von ätherischem Öl vorliegen. Hierzu können die zuvor beschriebenen biogenen und/oder pflanzlichen Materialien aus Rückständen bezogen werden, die bereits in der entsprechenden Form vorliegen, beispielsweise in Form von pulverförmigen Rückständen, wie Kaffeesatz. Alternativ können Rückstände auch in einem oder mehreren Zerkleinerungsschritten, wie mittels einer Schneidmühle und/oder eines Refiners, in den entsprechenden Zustand überführt werden. Beispielsweise können Extraktionsrückstände in Form von ganzen oder nur grob zerkleinerten Teeblättern mit Hilfe eines Refiners in faserförmiges Material überführt werden.

Ein Verbundmaterial ist insbesondere ein Werkstoff aus zwei oder mehr verbundenen Materialien, der andere Werkstoffeigenschaften besitzt als seine einzelnen Komponenten. Für die Eigenschaften der Verbundwerkstoffe sind insbesondere stoffliche Eigenschaften und Geometrie der Komponenten von Bedeutung. Die Verbindung erfolgt insbesondere durch Stoff- oder Formschluss oder eine Kombination von beidem.

Das erfindungsgemäße Verbundmaterial umfasst ein Fasermaterial und ein Bindemittel. Insbesondere sind Fasermaterial und Bindemittel derart aufeinander abgestimmt, dass das Bindemittel in dem Verbundmaterial keine durchgängige Phase bildet, beispielsweise das Verbundmaterial ein, bindemittelgebundener, d.h. etwa ein polymergebundener Vliesstoff ist. Dadurch kann insbesondere vermieden werden, dass das Verbundmaterial sich bei, insbesondere unbeabsichtigter, Erwärmung plastisch verformt. Insbesondere kann das Bindemittel eine Glasübergangstemperatur von weniger als 20°C aufweisen.

Vorzugsweise zeichnet sich das Verbundmaterial dadurch aus, dass es kein thermoplastisches Verhalten aufweist, also unter Wärmeeinfluss nicht (bzw. nicht wesentlich) plastisch verformbar ist (erweicht). Entsprechende Ausführungsformen werden nachfolgend als nicht-thermoplastisches Verbundmaterial bezeichnet. Vorzugsweise nimmt die Bruchdehnung des nicht-thermoplastischen Verbundmaterials insbesondere unter Wärmeeinfluss nicht zu sondern ab. Dies bedeutet insbesondere, dass thermoplastische Effekte für das nicht-thermoplastische Verbundmaterial auf makroskopische Ebene nicht beobachtet werden können. Dies kann insbesondere dadurch erreicht werden, dass das Bindemittel nicht in einer durchgängigen Phase vorhanden ist. Das Bindemittel liegt also nicht als eine im Wesentlichen monolithische Struktur (Matrix) vor, in der das Fasermaterial eingebettet ist. Vielmehr ist das Bindemittel in dem nicht-Verbundmaterial in einer Vielzahl diskreter, d.h. räumlich voneinander getrennter Abschnitte vorhanden. Hierdurch wird insbesondere eine verbesserte Temperaturbeständigkeit des Verbundmaterials gegenüber bekannten, insbesondere thermoplastischen Verbundmaterialien erreicht.

Es kann etwa vorgesehen sein, dass das Verbundmaterial in der Form eines bindemittel(polymer)gebundenen Vliesstoffs vorliegt, in dem diskrete, voneinander getrennte Bindemittelmengen die Bindung der Fasern des Vliesstoffs zueinander verstärken. Eine solche Struktur zeichnet sich insbesondere durch sein nicht-thermoplastisches Verhalten und Betonung der Fasereigenschaften (Offenporigkeit, Feuchtigkeitsregulierung, gute Verklebbarkeit) aus.

Es kann vorgesehen sein, dass das Verbundmaterial eine geringe Gesamtemission nach VDA 277 oder VDA 278 aufweist. Insbesondere kann vorgesehen sein, dass das Verbundmaterial Gesamtemission von weniger als 250 µgC/g nach VDA 277 aufweist. Es kann ebenfalls vorgesehen sein, dass das Verbundmaterial Gesamtemission von weniger als 200 µg/g nach VDA 278 /oder einen Fog-Wert von < 1000 µg/g aufweist. Es kann vorgesehen sein, dass das Verbundmaterial eine Gesamtemission nach AgBB/DIN EN ISO 16000 von < 0,001 mg/m3 aufweist. Es kann vorgesehen sein, dass das Verbundmaterial eine TVOC 3d (total volatile organic compound; 3 Tage) Emission von < 10 mg/m3 aufweist. Die angegebenen Normen VDA 277, VDA 278, DIN EN ISO 16000, AgBB und TVOC 3d beziehen sich jeweils auf die zum Anmeldetag (Prioritätstag) gültige Fassung.

Die Gesamtemission und/oder die TVOC-Emission des Verbundmaterials können entweder durch die Auswahl geeigneter Bestandteile, insbesondere eines geeigneten Bindemittels, etwa durch ein geeignetes Herstellungsverfahren desselben, und geeigneter Additive, erreicht werden. Es kann etwa vorgesehen sein, dass zum Zweck der Emissionsreduktion ein Bindemittel mit einem geringen Anteil an Restmonomer(en) und/oder anderen Emittenten verwendet wird.

Alternativ kann die Gesamtemission und/oder die TVOC-Emission des Verbundmaterials gemäß den obigen Ausführungsformen dadurch erreicht werden, dass entweder das Verbundmaterial oder ein oder mehrerer Materialien, die zur Herstellung des Verbundmaterials verwendet werden, einer chemischen oder physikalischen Reinigungs- und Desodorierungsprozedur unterworfen wurden. Geeignete chemische oder physikalische Reinigungs- und Desodorierungsprozeduren sind etwa eine Nachpolymerisation, ein Steam-Stripping- oder Gas-stripping-Schritt oder eine Membranfiltration oder Kombinationen daraus. Ein entsprechendes Verfahren ist etwa aus der EP 0 967 232 A1 bekannt.

Wie den weiter unten beschriebenen Beispielen entnehmbar ist wurde festgestellt, dass mit dem bindemittel(polymer)gebundenen Vliesstoff, insbesondere im Vergleich zu einem Verbundmaterial mit durchgängiger Phase, gewünschte mechanische Eigenschaften, insbesondere hinsichtlich Elastizität, Biegesteifigkeit, Luftdurchlässigkeit und WasserdampfSpeicherfähigkeit bereitgestellt werden können, was insbesondere für den Einsatz des Verbundmaterials bei den weiter unten beschriebenen Einsatzgebieten von Vorteil ist.

Das erfindungsgemäße Verbundmaterial umfasst ein Fasermaterial. Unter Fasermaterial ist insbesondere ein Material zu verstehen, dass eine Vielzahl von Fasern aufweist. Vorzugsweise umfasst Fasermaterial im Sinne der vorliegenden Erfindung, bezogen auf das Gesamtgewicht des Fasermaterials, einen Faseranteil von wenigstens 30 Gew.-%, 40 Gew.-%, 50 Gew.-%, 60 Gew.-%, 70 Gew.-%, 80 Gew.-%, 90 Gew.-%, 95 Gew.-%, 99 Gew.-% oder 100 Gew.-%. Das Fasermaterial kann insbesondere eine Vielzahl von miteinander verzweigten Fasern aufweisen. Unter einer Faser kann im Allgemeinen ein lineares, elementares Gebilde verstanden werden, das aus einem Faserstoff besteht und dessen zumindest äußere Faserform im Wesentlichen eine Längsform aufweist und welches zumindest eine in Bezug auf die Dicke deutlich größere Längserstreckung aufweist. Insbesondere ist unter einer Faser ein Gebilde zu verstehen, dessen Längserstreckung deutlich größer ist, insbesondere wenigstens 3-mal, 5-mal, 10-mal, 20-mal oder 50-mal so groß, wie dessen Dicke, insbesondere Radialerstreckung. Unter der Längserstreckung ist insbesondere die Länge einer Faser im gestrecktem (geradlinigen) Zustand zu verstehen. Vorzugsweise weist eine Faser im Sinne der vorliegenden Erfindung eine Längserstreckung von mindestens 0,02 mm, 0,03 mm, 0,05 mm, 0,1 mm, 0,2 mm,0,3 mm, 0,4 mm oder 0,5 mm auf. Unter einer Faserform ist insbesondere keine Pulverform zu verstehen und umgekehrt. Im Gegensatz zu einer Faserform zeichnet sich eine Pulverform insbesondere durch ein nicht lineares oder längsförmiges Gebilde, insbesondere durch ein räumliches, insbesondere kugel- oder klumpenförmiges Gebilde aus. Insbesondere zeichnet sich eine Pulverform durch eine im Wesentlichen gleiche Erstreckung in zumindest zwei, vorzugsweise drei, zueinander orthogonale Richtungen aus. Unter im Wesentlich gleich ist insbesondere eine Abweichung von maximal dem 2.5-fachen, 2-fachen, 1.5-fachen oder dem 1-fachen der kleinsten Erstreckung in eine der Richtungen zu verstehen. Insbesondere ist unter einer Pulverform eine Form zu verstehen, dessen größte Erstreckung kleiner ist als 0,02 mm, 0,03 mm, 0,05 mm, 0,1 mm, 0,2 mm, 0,3 mm, 0,4 mm oder 0,5 mm.

Vorzugsweise umfasst das Fasermaterial organisches Fasermaterial. Unter organischem Fasermaterial ist insbesondere sowohl natürlich gewonnenes als auch natürlich gewinnbares Fasermaterial zu verstehen, wobei auch synthetisch hergestellte Fasern umfasst sind, solange diese auf organischer Basis (natürliche Materialien) beruhen. Das heißt insbesondere Fasermaterial kann bereits in der Natur in faserförmigen Zustand vorkommen (natürlich gewonnen) und/oder es kann durch einen Behandlungsschritt in eine faserige Struktur überführt werden (natürlich gewinnbar). Unter den organischen Materialien sind insbesondere sowohl pflanzliche Fasermaterialien (Pflanzenfasermaterial) als auch tierische Fasermaterialien, wie Lederfasermaterialien, Wollfasermaterialien und Seidenfasermaterialien, geeignet.

Vorzugsweise umfasst wenigstens 10 Gew.-%, 20 Gew.-%, 30 Gew.-%, 40 Gew.-%, 50 Gew.-%, 60 Gew.-%, 70 Gew.-%. 80 Gew.-%, 90 Gew.-%, 95 Gew.-%, 99 Gew.-% oder 100 Gew.-% des Fasermaterials, bezogen auf das Gesamtgewicht des Fasermaterials, organisches Fasermaterial, vorzugsweise natürliche gewonnenes Fasermaterial. Insbesondere durch den Einsatz von natürlich gewonnenem Fasermaterial fällt der energieaufwendige Behandlungsschritt zur Herstellung der faserigen Struktur wenigstens teilweise weg, was die ökologische Verträglichkeit des Verbundmaterials steigert.

Vorzugsweise wird das organische Fasermaterial ausgewählt aus der Gruppe bestehend aus Pflanzenfasermaterial, wie Samenfasermaterial, insbesondere Baumwolle und/oder Kapok, Bastfasermaterial, insbesondere Hanf, Flachs, Jute, Sunn, Kenaf, Urena, Rosella, Ramie und/oder Nessel, Hartfasermaterial, insbesondere Sisal, Hennequen, Abaka, Fique, Ananas und/oder Banane, und/oder Fruchtfasermaterial, insbesondere Kokos, und/oder Tierfasermaterial, wie Lederfasermaterial, Wollfasermaterial und/oder Seidenfasermaterial, insbesondere zu einem Anteil von 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, 99 Gew.-% oder 100 Gew.-%, bezogen auf das Gesamtgewicht des Fasermaterials. Besonders bevorzugt wird das Fasermaterial ausgewählt aus der Gruppe bestehend aus aus Produktionsrückständen und/oder Sekundärrohstoffen gewonnenes Fasermaterial, Baumwollfasermaterial, Papierfasermaterial, Holzfasermaterial, insbesondere Papierfasermaterial, Fasermaterial der Ordnung Poales, Lederfasermaterial oder Mischungen von zwei oder mehr davon umfasst, insbesondere besteht daraus.

In einer Ausführungsform beträgt der Anteil des Lederfasermaterials wenigstens 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, 99 Gew.-% oder 100 Gew.-%, bezogen auf das Gesamtgewicht des Fasermaterials.

In einer alternativen Ausführungsform beträgt der Anteil des Pflanzenfasermaterials wenigstens 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, oder 99 Gew.-%, bezogen auf das Gesamtgewicht des Fasermaterials. Dadurch kann der hohe Ressourcenverbrauch, der mit der Züchtung von Tieren und mit der Verarbeitung des dadurch gewonnenen Fasermaterials einhergeht, zumindest teilweise reduziert werden, was die ökologische Verträglichkeit des Verbundmaterials steigert.

Insbesondere kann das Fasermaterial Pflanzenfasermaterial der Ordnung der Poales aufweisen. Vorzugsweise umfasst das Pflanzenfasermaterial der Ordnung der Poales Pflanzenfasermaterial der Familie der Poaceae, insbesondere besteht daraus. Besonders bevorzugt umfasst das Pflanzenfasermaterial der Ordnung der Poales Pflanzenfasermaterial der Unterfamilien der Pooideae, der Orzyoideae, der Panicoideae, der Antropogonoideae oder Mischungen von zwei oder mehr davon, insbesondere besteht daraus. Insbesondere umfasst das Pflanzenfasermaterial der Poales Pflanzenfasermaterial des Stammes der Triticeae, Aveneae, Orzyzeae, Pariceae, Zeeae oder Mischungen von zwei oder mehr davon, insbesondere besteht daraus. Besonders bevorzugt umfasst das Pflanzenfasermaterial der Ordnung der Poales Pflanzenfasermaterial der Gattung von Weizen, Dinkel, Roggen, Gerste, Hafer, Reis, Hirse, Mais oder Mischungen von zwei oder mehr davon, insbesondere besteht daraus.

Es wurde erkannt, dass die zuvor beschriebenen Pflanzenfasermaterialien der Ordnung der Poales für gattungsgemäße Verbundmaterialien eingesetzt werden können. Insbesondere im Zusammenspiel mit den nachfolgend beschriebenen Mengenanteilen von Bindemittel und Pflanzenfasermaterial hat sich herausgestellt, dass entsprechende Verbundmaterialien für die weiter unten beschriebenen Zwecke eingesetzt werden können. Ein Vorteil an derartigen Pflanzenfasermaterialien besteht darin, dass diese nahezu weltweit bei der Nahrungsmittelherstellung gewonnen werden und diese somit lokal hergestellt und verarbeitet werden können, wodurch emissionsverursachende Transporte vermieden werden. Darüber hinaus ist durch die hohe Bedeutung dieser Pflanzenfasermaterialien in der Nahrungsmittelherstellung damit zu rechnen, dass dieses Fasermaterial langfristig zur Verfügung stehen wird. Ein weiterer Vorteil besteht darin, dass große Teile von derartigem Pflanzenfasermaterial als Rückstände bei der Nahrungsmittelherstellung anfallen, sodass deren Verwendung in gattungsgemäßen Verbundmaterialien den Ausnutzungsgrad der Lebensmittelherstellung erhöht und diese somit nachhaltiger macht.

Besonders bevorzugt umfasst das Pflanzenfasermaterial der Gattung Poales Pflanzenfasermaterial aus Spreu, insbesondere Getreidespreu. Als Spreu, insbesondere Getreidespreu, werden vorzugsweise die beim Dreschen von Getreide, wie Weizen, Dinkel, Roggen, Gerste, Hafer, Reis, Hirse und/oder Mais, abfallenden Bestandteile der jeweiligen Getreidepflanze bezeichnet. Vorzugsweise umfasst das Spreu die Spelze, welche die Blüte schützend umgibt, die Hülse, Granne, Samenhülle und/oder Stängelteile, wobei auch Bestandteile der Frucht bzw. des Samens bzw. der Blüte vorhanden sein können. Unter Getreide im Sinne der vorliegenden Erfindung seien insbesondere sämtliche unter die Gattung der Poales fallenden Pflanzenfasermaterialien zu verstehen. Besonders bevorzugt weist das Pflanzenfasermaterial Spelzfasermaterial auf. Unter Spelzfasermaterial ist insbesondere aus Spelze gewonnenes Fasermaterial zu verstehen.

Vorzugsweise beträgt der Anteil des Pflanzenfasermaterials, insbesondere Spelzfasermaterial, das aus Spreu, insbesondere Getreidespreu, gewonnen wird, wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Pflanzenfasermaterials der Ordnung Poales. Zusätzlich oder alternativ beträgt vorzugsweise der Anteil des Pflanzenfasermaterials der Ordnung Poales wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Fasermaterials, insbesondere Pflanzenfasermaterials.

Ein weiterer Vorteil in dem Einsatz vom Pflanzenfasermaterial, das aus Spreu, insbesondere Getreidespreu, gewonnen wird, besteht darin, dass die Herkunft aus Spreu dem Verbundmaterial anzusehen ist, was dem Verbundmaterial ein auf vegane Bestandteile hinweisende Aussehen (veganes Aussehen/vegane Eindruck) verleiht. Dadurch kann beispielsweise beim Einsatz des Verbundmaterials für Wandbekleidung in Verkaufsräumen die Sympathie des Kunden für den Verkäufer gesteigert werden. Außerdem kann beispielsweise bei der Verkleidung von Gegenständen das dadurch erzielte vegane Aussehen einen Kaufanreiz darstellen.

Alternativ oder zusätzlich weist das Pflanzenfasermaterial aus Sekundärrohstoffen und/oder aus Produktionsrückständen gewonnenes Fasermaterial aufweisen . Derartiges Pflanzenfasermaterial wird zur vereinfachten Lesbarkeit folgend als rezykliertes Pflanzenfasermaterial bezeichnet.

Unter Produktionsrückständen sind insbesondere Rückstände zu verstehen, die bei der Verarbeitung von Fasermaterial anfallen. Als Beispiele seien insbesondere Schneid- und Stanzrückstände, beispielsweise bei der Verarbeitung von Stoffen und Papier, Rückstände aus der Baumwollverarbeitung, insbesondere Kämmlinge, Grundbaumwolle, Kardenabfälle, Schlichtfäden und Reißfasermaterial, aber auch Rückstände aus der Lebensmittelverarbeitung, wie Spelze, zu verstehen.

Unter Sekundärrohstoff ist insbesondere aus Produkten, wie Papierbechern und Textilen, wiedergewonnenes Material zu verstehen.

Rezyklierte Pflanzenfasermaterial zeichnen sich insbesondere durch eine gegenüber Frischfasermaterial kürzere Faserlänge sowie eine geschwächte, insbesondere ausgefranste, Struktur auf. Ausgefranste Fasern erkennt der Fachmann unter dem Mikroskop. Als Beispiel für eine Methode zum Erkennen von ausgefransten Fasern wird auf die Studie "Wie entstehen ausgefranste Fasern während des Veredelungsprozesses - Identifizierung von ausgefransten Fasern unter einem hochauflösenden Mikroskop" (ISBN-13: 9786202742887) verwiesen, deren diesbezüglicher Inhalt hiermit in den Offenbarungsgehalt dieser Anmeldung einbezogen wird.

In der Textilindustrie werden große Mengen von Fasern verarbeitet. Dabei entstehen an einigen Stellen der Wertschöpfungskette Produktionsrückstände. Beispielsweise bleiben beim Auskämmen von abstehenden Fasern aus Garnen die ausgekämmten Fasern als Produktionsrückstände zurück. Diese Fasern werden als Kämmlinge bezeichnet. Insbesondere durch das Auskämmen erhalten die Fasern eine ausgefranste Struktur. Da Kämmlinge in der Regel eine relativ geringe Faserlänge aufweisen und durch den Auskämmprozess stark mechanisch belastet werden, fanden diese vor der vorliegenden Erfindung nur sehr beschränkt Einsatzgebiete.

Weitere Produktionsrückstände fallen bei der Verarbeitung von Rohbaumwolle an. Der Samen der Baumwolle bildet als Verlängerung seiner Epidermis längere Haare, die als Lint bezeichnet werden, und drei bis fünf Tage nach der Blüte kürzere Haare, die Linter oder Grundbaumwolle genannt werden. Zur Gewinnung von Baumwolle wird Rohbaumwolle entkörnt. Dabei werden die Lints von den Samen abgerissen, während die Grundbaumwolle am Samen verbleibt. In der Regel bleiben bei 4 Gramm Rohbaumwolle nach dem Entkörnen etwa 1,5 Gramm Grundbaumwolle übrig. Mit sogenannten Lintermaschinen, Lintergins oder Entwollmaschinen wird die Grundbaumwolle von den Samen entfernt. In der Regel werden Lints zu dünnen Fäden gesponnen und beispielsweise für Textilien verwendet. Da Grundbaumwolle eine geringere Faserlänge und durch den zweifachen Entkernprozess eine geringere Festigkeit aufweist, fand diese vor der vorliegenden Erfindung nur wenige Einsatzgebiete, wie in der Papierherstellung, als Filz oder als Polstermaterial.

Produktionsrückstände fallen außerdem beim Kardieren beispielsweise von Baumwolle an. Neben Schmutz und Staub umfasst der sogenannte Kardenabfall auch Fasern. Diese können über Kardenabfall-Reinigungsmaschinen von dem verbleibenden Abfall gereinigt werden. Da von Kardenabfall gewonnene Fasern, insbesondre auf Grund des zweifachen Verarbeitens, nämlichen in der Kardiermaschine und in der Kardenabfall-Reinigungsmaschine, in der Regel sehr kurze Faserlänge und eine geringe Festigkeit aufweisen, fanden auch diese vor der vorliegenden Erfindung nur beschränkt Einsatzgebiete.

Weitere Produktionsrückstände fallen in Form von Schlichtfasern an. Schlichtfasern sind mit einem Schlichtmittel, insbesondere umfassend Stärke, Polyvinylacetat, NatriumCarboxymethylcellulose und/oder Polyacrylate, beschichtete Fasern. Schlichtmittel werden insbesondere vor dem Webprozess zur Stärkung der Kettfäden aufgebracht. Von dem fertigen Gewebe werden die Schlichtmittel mittels der sogenannten Entschlichtung wieder entfernt. Fäden, die aus Produktionsrückständen gewonnen werden, die zwischen dem Schlichten und dem Entschlichten anfallen, weisen das Schlichtmittel auf. Eine Entschlichtung dieser Produktionsrückstände ist häufig aus ökonomischen und/oder ökologischen Gründen nicht sinnvoll, sodass Schichtfäden vor der vorliegenden Erfindung nur eingeschränkte wiederverwendet wurden.

Aber auch bei der Herstellung, insbesondere in der Weberei, und Verarbeitung von Geweben und Gestricken zu Kleidung fallen beispielsweise Schnittreste als Produktionsrückstände an. Schließlich fallen auch die Kleidungsstücke, beispielsweise Jeans oder T-Shirts, am Ende ihres Lebenszyklus als Sekundärrohstoffe an. Aus Nachhaltigkeitsgründen ist es geboten, diese Rückstände wiederzuverwerten. So ist es beispielsweise bekannt gebrauchte Textilien und Schnittreste über den sogenannten Reißprozess mit einem Reißtambour in Reißfasern zu überführen. Auch diese erkennt der Fachmann insbesondere an Ihrer ausgefransten Struktur. Dadurch kann das Textil wieder teilweise in Fasern überführt werden. Neben Fasern umfassen Reißfasern aber häufig auch nicht faserförmige Textilreste, wie Pitzen, Fadenstücke und Textilflächenreste, welche die Wiederverwertbarkeit der Fasern erschweren. Im Rahmen der vorliegenden Erfindung wurde erkannt, dass diese Textilreste zumindest teilweise in einem Zerkleinerungsschritt, beispielsweise mit Schneidmühle und/oder Refiner, insbesondere Kegelrefiner oder Scheibenrefiner, in Fasermaterial überführt werden können.

Sekundärrohstoffe fallen außerdem in der Papierindustrie, insbesondere in Form von Altpapierstoff an, dessen Faserlänge mit jedem Wiederverwertungszyklus kleiner wird, bis die Fasern an einem Punkt dem nicht wiederverwertbaren Abfällen zugeordnet werden.

Zur Wiederverwertung von rezykliertem Fasermaterial, insbesondere von Reißfasern und/oder Kämmlingen, ist es bekannt diese wieder zu Garnen zu spinnen. Hierzu ist jedoch je nach Spinnverfahren eine gewisse Durchschnittslänge der Fasern erforderlich. Um diese bereitzustellen, werden zu kurze Fasern teilweise aussortiert wodurch bereits beim ersten Wiederverwertungszyklus Rückstände entstehen, die auf diese Weise nicht wiederverwertet werden können. Aber selbst die Fasern, die erfolgreich wiederverwertet werden können, werden durch jeden weiteren Wiederverwertungszyklus, beispielsweise durch Reißen, kürzer, bis sie selbst zu nicht wiederverwertbaren Rückständen werden. Überraschenderweise hat sich herausgestellt, dass rezykliertes Pflanzenfasermaterial nicht nur durch das Spinnen in Garne wiederverwendet werden kann, sondern auch in gattungsgemäßen Verbundmaterialien. Insbesondere im Zusammenhang mit den zuvor beschriebenen Mengenanteilen von Bindemittel und Fasermaterial können derartige Verbundmaterialien für die weiter unten beschriebenen Anwendungszwecke verwendet werden. Insbesondere durch den Einsatz von Bindemitteln kann dabei rezykliertes Pflanzenfasermaterial mit deutlich kürzeren Faserlängen wiederverwendet werden als bei der Herstellung von Garnen. So ist beispielsweise bei der Herstellung von Garnen in der Regel eine Mindestfaserlänge von 25 mm der wiederzuverwertenden Fasern erforderlich. Im Gegensatz dazu kann mit dem erfindungsgemäßen Verbundmaterial auch Fasermaterial wiederverwendet werden, das in einem deutlich geringeren Faserlängenbereich, wie insbesondere im Detail weiter unten beschrieben, liegt. Insbesondere hat sich herausgestellt, dass Fasermaterial mit einer Faserlänge von weniger als 2 mm wiederverwendet werden kann, wofür es vor der vorliegenden Erfindung keine höherwertigen Wiederverwendungsmöglichkeiten gab. Unter höherwertigen Wiederverwendungsmöglichkeiten sind insbesondere die weiter unten beschriebenen Einsatzgebiete des Verbundmaterials zu verstehen. Dabei wurde festgestellt, dass mit die mit rezykliertem Pflanzenfasermaterial einhergehende kürzere Faserlänge für die Einsatzgebiete der vorliegenden Erfindung nicht nur ausreicht, sondern sogar vorteilhaft ist. Denn die vorliegende Erfindung nutzt insbesondere Fasern mit relativ kurzer Faserlänge, die beim Einsatz von längeren Fasern als Ausgangsmaterial zunächst in einem zeit- und wasserverbrauchintensiven Verfahren, insbesondere mittels Refiner, zerkleinert werden müssen. Durch den Einsatz von rezykliertem Pflanzenfasermaterial werden daher zusätzlich zum Erschließen neuer Einsatzgebiete, die Kosten und der Ressourcenverbrauch gegenüber Primärfaserrohstoffen reduziert.

Insbesondere ist das rezyklierte Fasermaterial ausgewählt aus rezykliertem Fasermaterial aus der Baumwollverarbeitung, der Textilherstellung, der Papierherstellung und/oder der Lebensmittelverarbeitung. Vorzugsweise ist das das rezyklierte Fasermaterial ausgewählt aus Kämmlingen, Grundbaumwolle, Kardenrückständen, Schlichtfasern, Reißfasern, Papierfasermaterial, und/oder Spelzfasermaterial. Alternativ oder zusätzlich weist das rezyklierte Pflanzenfasermaterial Baumwollfasermaterial, Holzfasermaterial und/oder Pflanzenfasermaterial der Gattung der Poales auf. Insbesondere beträgt der Anteil der zuvor beschriebenen bevorzugten rezyklierten Fasermaterialien wenigstens 50 Gew.-%, 75 Gew.-%, 90 Gew.-% oder 95 Gew.-%, 97 Gew.-% oder 99 Gew.-%, bezogen auf das Gesamtgewicht des rezyklierten Pflanzenfasermaterials.

In bevorzugten Ausführungsformen weist das rezyklierte Pflanzenfasermaterial rezykliertes Baumwollfasermaterial, insbesondere in Form von Reißbaumwolle, Baumwollkämmlingen, Grundbaumwolle, Baumwollkardenrückständen und/oder Baumwollschlichtfasen, auf. Besonders bevorzugt liegt der Anteil der rezyklierten Baumwolle, bezogen auf das Gesamtgewicht des Pflanzenfasermaterials, zwischen 30% und 100%, 50% und 95%, besonders bevorzugt zwischen 70% und 90%. Der Einsatz von Baumwollfasern hat sich als besonders bevorzugt herausgestellt, da diese als Produktionsrückstände in großen Mengen zur Verfügung stehen und spätestens nach dem ersten oder zweiten Wiederverwendungszyklus aufgrund ihrer kurzen Faserlänge nicht mehr für Textilien wiederverwendet werden können. Besonders bevorzugt handelt es sich bei dem rezyklierten Pflanzenfasermaterial um aus Kleidung, insbesondere aus Jeansstoffen, wiedergewonnenes Pflanzenfasermaterial. Besonders bevorzugt handelt sich dabei um Pflanzenfasermaterial, das aus gefärbten Kleidungsstücken wiedergewonnenen wird, was an der Färbung der daraus wiedergewonnenen Pflanzenfasermaterial erkennbar ist. Besonders bevorzugt handelt es sich bei der Reißbaumwolle um aus Jeansstoff wiedergewonnenes Pflanzenfasermaterial, die insbesondere an ihrer Indigofärbung, die für Jeansstoffe üblich ist, erkennbar ist. Geeignetes Ausgangsmaterial für die Herstellung des erfindungsgemäßen Verbundwerkstoffs mit rezyklierten Baumwollfasern sind insbesondere die Baumwollschlichtfäden mit der Artikelnummer 449S1G des Unternehmens WSR Advanced Raw Materials GmbH, die aus Jeans gewonnene Reißbaumwolle mit der Artikelnummer 10348 des Unternehmens ALTEX Textil-Recycling oder die Reißbaumwolle mit der Artikelnummer 11106 des Unternehmens des Unternehmens ALTEX Textil-Recycling.

Üblicherweise handelt es sich bei rezykliertem Pflanzenfasermaterial um ein Fasergemisch. Dies liegt insbesondere daran, dass beispielsweise Kleidungsstücke aufgrund erhöhter Anforderung an deren Komfort in der Regel einen Mindestanteil an Fasern aufweist, die die Eigenschaften des Garns beeinflussen. Beispielsweise werden in der Regel Elastomerfasern, wie Spandexfasern, eingesetzt, um die Elastizität der Kleidungsstücke zu erhöhen. Weiterhin werden häufig Polyesterfasern zur Erhöhung der Formstabilität der Kleidungsstücke eingesetzt. Dies führt dazu, dass rezykliertes Pflanzenfasermaterial, das aus derartigen Textilien gewonnen wird, einen Anteil an Mischfasern aufweist. Bei der klassischen Wiederverwertung von rezykliertes Pflanzenfasermaterial in Form von Garnen beeinträchtigt der Anteil der Mischfasern die Eigenschaften der daraus gesponnenen Garne. Dadurch ist rezykliertes Pflanzenfasermaterial mit einem Anteil an Mischfasern nur begrenzt für die Wiederverwertung in Garnen geeignet. Je höher der Anteil der Mischfasern wird, umso geringer wird die Eignung für die Wiederverwertung in Garnen.

Unter Mischfasern sind insbesondere nichtpflanzliche Fasern, insbesondere keine Baumwollfasern, Holzfasern und/oder Fasern der Ordnung der Poales, zu verstehen. Insbesondere sind unter Mischfasern synthetische Fasern und/oder Naturfasern zu verstehen. Dabei kommen sämtliche, insbesondere in der Textilindustrie eingesetzten Mischfasern in Betracht. Insbesondere kommen für die Mischfasern Fasern ausgewählt aus der Gruppe bestehend aus Polyamidfasermaterial, insbesondere Polyesterfasermaterial, Polyacrylfasermaterial, Elastanfasermaterial, Tierfasermaterial, wie Lederfasermaterial, Wollfasermaterial und/oder Seidenfasermaterial, oder Mischungen von einem oder mehreren daraus in Betracht. Überraschenderweise hat sich herausgestellt, dass selbst ein hoher Anteil von Mischfasern bei erfindungsgemäßen Verbundmaterialien eingesetzt werden kann, ohne deren Eignung für die nachfolgend beschriebenen Zwecke zu beeinträchtigen. Insbesondere Mischfaseranteile von bis zu 25 Gew.-% haben sich als unproblematisch herausgestellt.

Insbesondere kann das rezyklierte Pflanzenfasermaterial ein Fasergemisch aus Pflanzenfasermaterial, insbesondere Baumwollfasern Holzfasern und/oder Fasern der Ordnung der Poales, und Mischfasern aufweisen. Insbesondere beträgt der Anteil der Mischfasern wenigstens 1 Gew.-%, 2 Gew.-%, 3 Gew.-%, 5 Gew.-%, 10 Gew.-%, 15 Gew.-%, 20 Gew.-% und/oder 25 Gew.-%. Alternativ oder zusätzlich beträgt der Anteil der Mischfasern höchstens 50 Gew.-%, 40 Gew.-%, 30 Gew.-%, 25 Gew.-%, 20 Gew.-%, 15 Gew.-% oder 10 Gew.-%, bezogen auf das Gesamtgewicht des rezykliertes Pflanzenfasermaterials. Vorzugsweise beträgt der Mischfaseranteil 1 Gew.-% bis 50 Gew.-%, insbesondere 5 Gew.-% bis 35 Gew.-%, besonders bevorzugt 10 Gew.-% bis 25 Gew.-%, bezogen auf das Gesamtgewicht des rezyklierten Pflanzenfasermaterial.

In einem Ausführungsbeispiel besteht das rezyklierte Pflanzenfasermaterial, insbesondere Reißfasermaterial, zu mindestens 75 Gew.-% aus Pflanzenfasermaterial, insbesondere Baumwolle, und zu höchstens 25 Gew.-% aus Mischfasern. Insbesondere wird bei dieser Ausführungsform rezykliertes Pflanzenfasermaterial mit einer mittleren Ausgangsfaserlänge zwischen 30 und 50 mm verwendet. Die mittlere Faserlänge ist durch Messen der Faserlänge der Fasern in einem Toleranzbereich und anschließendes Mitteln der Faserlänge über die Gesamtanzahl der gemessenen Fasern ermittelbar. Vorzugsweise liegt der Toleranzbereich zwischen 5 mm und 80 mm. Das rezyklierte Pflanzenfasermaterial gemäß dieser Ausführungsform der Erfindung kann nachfolgend zerkleinert werden, um eine Faserverteilung wie in dem nachfolgend beschriebenen Aspekt der Erfindung beschrieben zu erhalten. Geeignetes Pflanzenfasermaterial für diese Ausführungsform ist beispielsweise Reißbaumwolle mit des Artikel Nr. 11106 des Unternehmens ALTEX Textil-Recycling

In einer alternativen Ausführungsform wird rezykliertes Pflanzenfasermaterial, insbesondere Reißfasermaterial, mit einem Pflanzenfasermaterialanteil, insbesondere Baumwollgewichtsanteil, von mindestens 90 Gew.-% und einem Mischfaseranteil von höchstens 10 Gew.-%, bezogen auf das Gesamtgewicht des rezyklierten Pflanzenfasermaterial, verwendet. Die Fasern bei dieser Ausführungsform können gefärbt, insbesondere blau gefärbt, sein. Vorzugsweise beträgt die mittlere Faserlänge bei dieser Ausführungsform 15 bis 30 mm, wobei der Toleranzbereich, in dem die Fasern zur Ermittlung der Faserlänge gemessen werden, 3 mm bis 40 mm betragen kann. Geeignetes rezykliertes Pflanzenfasermaterial für diese Ausführungsform ist beispielsweise aus Jeans gewonnene Reißbaumwolle mit der Artikelnummer 10348 des Unternehmens ALTEX Textil-Recycling.

Alternativ zum Einsatz von Baumwolle hat sich der Einsatz von Papierfasermaterial, als rezykliertes Pflanzenfasermaterial, insbesondere Sekundärrohstoff, als vorteilhaft herausgestellt. Vorzugsweise beträgt der Anteil von Papierfasermaterial wenigstens Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-% bezogen auf das Gesamtgewicht des rezyklierten Pflanzenfasermaterials. Unter Papierfasermaterial ist insbesondere aus Papier und/oder Pappe gewonnenes Fasermaterial zu verstehen. Papierfasermaterial kann auch als Altpapierstoff bezeichnet werden. Geeignetes Papierfasermaterial ist insbesondere Altpapierstoff der Gruppen 2 bis 5 gemäß DIN EN 643:2014-11. Bevorzugt handelt es sich bei dem Altpapierstoff um Altpapierstoff der Gruppe 2 oder 5 gemäß DIN EN 643:2014-11. Als besonders geeignet hat sich Altpapierstoff der Klassen 2.10.00, 2.11.00, 5.05.00, 5.05.01, 5.06.00, 5.06.01, 5.07.00, 5.07.01, 5.14.00 und/oder 5.14.01 gemäß DIN EN 643:2014-11 herausgestellt. Als besonders bevorzugt hat sich Altpapierstoff der Klasse 5.14.00 und/oder 5.14.01 herausgestellt.

Vorzugsweise ist das Papierfasermaterial aus Papier und/oder Pappe gewonnen, das/die ein Additiv umfasst, das ausgewählt ist aus der Gruppe, bestehend aus einem Flockungsmittel, einem Fixiermittel, einem Entwässerungshilfsmittel, einem Füllstoff und einem Nassfestmittel, insbesondere ausgewählt aus Polyamin-Epichlorhydrin-Harze, Harnstoff- oder MelaminFormaldehyd-Harze und vernetzte Aldehyde wie glyoxylierte Polyacrylamide. Handelsnamen für geeignete Nassfestmittel sind GILUTON, LURESIN KS, QUIMEX 8015, AMRES ULTRA 25. Insbesondere nassfeste Papiere, wie die gemäß EN 643 den Klassen 5.05.00, 5.05.01, 5.06.00, 5.06.01, 5.07.00, 5.07.01, 5.14.00 und/oder 5.14.01 zugeordneten Papiere, können auf Grund der darin eingesetzten Nassfestmittel nicht als Recyclingpapier wiederverwendet werden. Denn die darin verwendeten Nassfestmittel können mit dem für die Papierindustrie klassischem Aufschlagen nicht oder nur unter hohem Reinigungsaufwand und/oder Ausscheidungsmengen in eine homogene Faserpulpe überführt werden. Dies wird auch als fehlende Repulpierbarkeit bezeichnet. Es hat sich gezeigt, dass dieses Problem durch Zerfasern, beispielsweise durch den/die zuvor und nachfolgend beschriebene/n Refiner, insbesondere Kegelrefiner oder Scheibenrefiner, und/oder Schneidmühle gelöst werden kann. Dadurch ermöglicht das vorliegende Verbundmaterial die Wiederverwertung von nassfestem Papier. Vorzugsweise umfasst das Papierfasermaterial daher aus nassfestem Papier wiedergewonnenes Fasermaterial. Insbesondere lässt sich dies in dem Verbundmaterial durch das Vorhandensein von Nassfestmitteln nachweisen. Insbesondere weist das Verbundmaterial Nassfestmittel auf.

Vorzugsweise beträgt der Anteil des rezyklierten Pflanzenfasermaterial, insbesondere der zuvor beschriebenen bevorzugten rezyklierten Pflanzenfasermaterialien, wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Pflanzenfasermaterials.

Alternativ oder zusätzlich kann das Pflanzenfasermaterial Holzfasermaterial aufweisen. Unter Holzfasermaterial soll insbesondere aus Holz gewonnenes Fasermaterial zu verstehen sein. Unter Holz ist insbesondere das harte Gewebe der Sprossachsen (Stamm, Äste und Zweige) von Bäumen und Sträuchern zu verstehen. Insbesondere ist unter Holz das von Kambium erzeugte sekundäre Xylem der Samenpflanzen definiert. Nach dieser Definition sind insbesondere Gewebe von Palmen und anderen höheren Pflanzen kein Holz im Sinne der vorliegenden Erfindung. Insbesondere zeichnet sich Holz durch die Einlagerung von Lignin in die Zellwand aus. Insbesondere ist unter Holz daher lignifiziertes (verholztes) pflanzliches Gewebe zu verstehen. Vorzugsweise ist unter Holz Nadelholz und/oder Laubholz zu verstehen. Unter Nadelholz ist insbesondere Holz mit einem Zelluloseanteil von 42 bis 49 Gew.-%, einem Hemizelluloseanteil von 24 bis 30 Gew.-%, einem Ligninanteil von 25 bis 30 Gew.-%, einem Extraktstoffanteil von 2 bis 9 Gew.-% und/oder einem Mineralienanteil von 0,2 bis 0,8 Gew.-% zu verstehen. Unter Nadelholz ist insbesondere ein Holz mit einem Zelluloseanteil von 42 bis 51 Gew.-%, ein Hemizelluloseanteil von 27 bis 40 Gew.-%, einem Ligninanteil von 18 bis 14 Gew.-%, einem Extraktstoffanteil von 1 bis 10 Gew.-% und einem Mineralienanteil von 0,2 bis 0,8 Gew.-% zu verstehen. Holz weist insbesondere einen spezifischen anatomischen Aufbau auf, sodass sich Holzarten anhand ihrer Makro- und Mikrostrukturen voneinander unterscheiden lassen. Hierzu zieht der Fachmann die wissenschaftliche Beschreibung von Holzstrukturen und Bestimmungen von Holzarten der Holzanatomie heran. Alternativ oder zusätzlich zum Holzfasermaterial kann das Verbundmaterial auch Zellulosefasermaterial aufweisen, insbesondere in den nachfolgend beschriebenen Mengenangaben des Holzfasermaterials. Insbesondere kann es sich bei dem Zellulosefasermaterial um Zellulosestoff und/oder Altpapierstoff, der auch als Papierfasermaterial bezeichnet werden kann, handeln.

Ein wesentlicher Vorteil an der Verwendung von aus Holz gewonnenen Fasern besteht darin, dass Holz große Mengen an CO₂ einspeichert, die durch die Kompostierung von Holz wieder freigesetzt und somit der Atmosphäre zugeführt werden. Demnach besteht ein Bedarf daran, das in Holz gespeicherte CO₂ so lange wie möglich in dem Produktzyklus zu behalten, um die Freisetzung des CO₂ zu verhindern. Es wurde erkannt, dass es von Vorteil ist, aus Holz gewonnenes Fasermaterial für die nachfolgend beschriebenen Einsatzzwecke zu verwenden, insbesondere für die Ummantelung, Kaschierung oder Tapezierung von Wänden, Böden, Decken oder Fensterrahmen, da diese in der Regel einen langen Produktlebenszyklus haben und somit das in dem Holz gespeicherte CO₂ langfristig binden. Ein weiterer Vorteil von Holz besteht darin, dass dieser als natürlicher CO₂-Speicher auch langfristig als Fasermaterial zur Verfügung stehen wird.

Bevorzugt weist das Holzfasermaterial Zellstoff, Holzstoff und/oder Altpapierstoff auf, insbesondere bestehend aus einem oder einer Mischung von einem oder mehreren davon. Diese Stoffe stellen die wichtigsten Faserstoffe für die Herstellung von Papier dar. Papier wird heutzutage nicht nur für Schreibwaren wie Blattpapier eingesetzt, sondern auch für Verpackungen wie Lebensmittelverpackungen, und Behälter, wie To-Go-Becher und To-Go-Teller, aber auch für Einmalprodukte wie Strohhalme aus Papier. Dabei wird Holzfasermaterial bereits heute häufig recycelt. Jedoch verkürzt sich mit jedem Recyclingschritt die Faserlänge des Holzfasermaterials, wodurch dessen Wiederverwertbarkeit immer geringer wird, bis schlussendlich nicht wiederverwertbare Rückstände übrigbleiben. Dies ist vor allem vor dem Hintergrund problematisch, dass beispielsweise Papierverpackungen und Papierbehälter einen sehr kurzen Lebenszyklus haben, was dazu führt, dass selbst bei mehreren Wiederverwertungszyklen, das in dem Holz gespeicherte CO₂ bereits nach kurzer Zeit durch Kompostierung der Rückstände der Atmosphäre zugeführt werden muss. Ein weiteres Problem besteht darin, dass beispielsweise beim Einsatz von Holzfasermaterial für flüssigkeitsführende Anwendungen, wie To-Go-Kaffeebecher und/oder Strohhalme, eine Beschichtung aufgetragen werden muss, die das Durchweichen verhindert. Diese Beschichtungen sind teilweise nicht oder nur langsam biologisch abbaubar. Aber selbst wenn die Beschichtungen biologisch abbaubar sind, stehen sie einer Wiederverwertung des Fasermaterials zumindest für einige Recyclingprodukte teilweise im Weg. Insbesondere nassfeste Papiere können aus den zuvor beschriebenen Gründen nicht als Recyclingpapier wiederverwendet werden. Vorzugsweise umfasst das Fasermaterial daher aus nassfestem Papier wiedergewonnenes Fasermaterial.

Insofern ermöglicht das erfindungsgemäße Verbundmaterial eine deutlich längere Speicherung des in dem Holzmaterial gebundenen CO₂ insbesondere bei den nachfolgend beschriebenen Verwendungen. Darüber hinaus hat sich herausgestellt, dass das erfindungsgemäße Verbundmaterial auch Holzfasermaterial mit sehr kurzer Faserlänge, wie nachfolgend beschrieben, wiederverwerten kann und somit Fasermaterial, das für andere Einsatzgebiete, wie die Papierherstellung, nicht mehr geeignet ist, weiterverwertet werden kann. Insbesondere hat sich herausgestellt, dass selbst Rückstände, wie Rückstände von Beschichtungen von Behältern, wie Kaffeebechern, in dem Fasermaterial dessen Wiederverwendung für die nachfolgend beschriebenen Produkte nicht im Wege steht, sodass mit der vorliegenden Erfindung eine weitere Materialgruppe wiederverwertet werden kann, die zuvor den nicht wiederverwertbaren Rückständen zugeordnet wurde.

Es hat sich daher als besonders bevorzugt herausgestellt, dass das Holzfasermaterial Altpapierstoff, der auch als Papierfasermaterial bezeichnet werden kann, aufweist. Insbesondere weist das Holzfasermaterial Altpapierstoff zu einem Anteil von wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Holzfasermaterials, auf. Altpapierstoff wird insbesondere auch als Sekundärfaserstoff bezeichnet. Unter Altpapierstoff ist insbesondere der aus Altpapier produzierte Halbstoff zu verstehen. Unter Papier ist insbesondere sowohl Papier als auch Pappe gemäß DIN6730 zu verstehen. Insbesondere zeichnet sich Papier durch eine flächenbezogene Masse von 7 bis 225 g/m² und Pappe durch eine flächenbezogene Masse ab 225 g/m² aus.

Vorzugsweise weist der Altpapierstoff aus bedruckten oder anderweitig gefärbten Altpapier wiedergewonnen Altpapierstoff, insbesondere zu einem Anteil von 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Altpapierstoffs, auf. Dies lässt sich insbesondere durch die Färbung der Fasern in dem Altpapierstoff erkennen.

Altpapierstoff wird als sekundärer Faserstoff (Recycling-Faserstoff/Sekundärrohstoff) grundsätzlich von Holzstoff und Zellulose unterschieden. Holzstoff ist insbesondere eine zusammenfassende Bezeichnung für Faserstoffe, die durch mechanische Zerfaserung aus Holz gewonnen werden. Unter Zellstoff ist insbesondere die beim chemischen Aufschluss von Pflanzenfasern entstehende faserige Masse, die insbesondere vorwiegend aus Zellulose besteht, zu verstehen.

Vorzugsweise beträgt der Anteil des Holzfasermaterials wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Fasermaterials, insbesondere Pflanzenfasermaterials.

Es hat sich als besonders bevorzugt herausgestellt, dass das Fasermaterial Papierfasermaterial und/oder Holzfasermaterial, vorzugsweise aus Papierbehältern, insbesondere aus To-Go-Bechern, insbesondere Kaffeebechern, insbesondere in Art und/oder Menge wie zuvor beschrieben, aufweist, insbesondere zu wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Fasermaterials aufweist. Besonders bevorzugt ist die Kombination dieses Fasermaterials mit dem zusätzlich zum Fasermaterial vorliegendem Aromaträger, insbesondere pulverförmigem Aromaträger, bevorzugt Extraktionsrückstände, besonders bevorzugt Kaffeesatz, insbesondere in Art und Menge wie zuvor beschrieben. Insbesondere vor dem Hintergrund, dass Kaffeebecher nach deren Verwendung in der Regel nicht gereinigt werden, haften diesen in der Regel Kaffeereste und/oder Kaffeesatz an. Die Reinigung der Kaffeebecher vor deren Wiederverwendung ist energieintensiv und geht mit Wasserbrauch einher. Durch den Einsatz Kaffeebechern in dem erfindungsgemäßen Verbundmaterial mit Kaffeepulver und/oder Kaffeesatz kann der Reinigungsschritt entfallen und somit die Umweltbelastung reduziert werden. Besonders bevorzugt liegt das Gewichtsverhältnis von Papierfasermaterial zu Kaffeesatz in einem Bereich zwischen 2/1 und 1/2, zwischen 1,5/1 und 1/1,5, zwischen 1,3/1 und 1/1,3, zwischen 1,1/1 und 1/1,1, ist beispielsweise 1/1.

Vorzugsweise weist das Bindemittel einen biologisch abbaubaren Anteil von wenigstens 20 Gew.-%, bezogen auf das Gesamtgewicht des Bindemittels auf. Vorzugsweise beträgt der biologisch abbaubare Anteil des Bindemittels wenigstens 30 Gew.-%, 40 Gew.-%, 50 Gew.-%, 60 Gew.-%, 70 Gew.-%, 80 Gew.-%, 90 Gew.-%, 95 Gew.-%, 99 Gew.-% oder 100 Gew.-% bezogen auf das Gesamtgewicht des Bindemittels. Überraschenderweise hat sich herausgestellt, dass es bei dem Einsatz des Verbundmaterials entgegen der Auffassung aus dem Stand der Technik nicht immer auf die thermoplastische Verformbarkeit ankommt, diese wie zuvor beschrieben sogar nachteilig sein kann, sodass auf die aus dem Stand der Technik bekannten Styrol-Aciylate im Bindemittel verzichtet werden kann. Insbesondere beim Einsatz des Verbundmaterials für die folgenden beschriebenen Anwendungsgebiete kommt es nicht auf die thermoplastische Verformbarkeit des Verbundmaterials an. Es wurde überraschenderweise festgestellt, dass, insbesondere bei diesen Anwendungsgebieten, ein hoher Anteil an biologisch abbaubaren Bindemitteln eingesetzt werden kann, ohne für die entsprechenden Anwendungsgebiete maßgebliche mechanische Eigenschaften des Verbundmaterials, insbesondere hinsichtlich Biegsamkeit und Wasserdampfspeicherfähigkeit, zu verlieren. Dadurch kann die biologische Abbaubarkeit und somit auch die Nachhaltigkeit des gesamten Verbundmaterials deutlich erhöht werden. Überraschenderweise wurde festgestellt, dass sogar Verbundmaterialien genutzt werden können, deren Fasermaterial zu 100% aus Pflanzenfasermaterial und deren Bindemittel zu 100% aus biologisch abbaubaren Bindemitteln bestehen, was zu vollständig biologisch abbaubaren Verbundwerkstoffen führen kann.

Unter biologisch abbaubar sind insbesondere Bindemittel zu verstehen, welche die Anforderungen der Norm ASTM-D6400-19, insbesondere die in den Abschnitten 5 und 6 definierten Tests erfüllen. Demnach kann die Formulierung "biologisch abbaubar" gemäß diesem Aspekt der Erfindung alternativ auch als "kompostierbar gemäß ASTM-D6400-19" bezeichnet werden.

Vorzugsweise umfasst das Bindemittel zumindest ein Polymer, insbesondere besteht aus zumindest einem Polymer, wobei das Polymer ausgewählt ist aus der Gruppe, bestehend aus Polyester, insbesondere aliphatischer Polyester, Polyamid, Polyacetal, Polyvinylalkohol, Polylactid, Polyurethan, Kautschuk, insbesondere Naturkautschuk, Polyvinylester, insbesondere Polyvinylacetat, Polybutadien, Zellulose und deren Derivate, Stärke und deren Derivate, einem Copolymer von zwei oder mehreren davon und einem Gemisch von zwei oder mehreren davon. Besonders bevorzugt ist das Polymer ausgewählt aus der Gruppe, bestehend aus Naturkautschuk, Polyurethan, Polyvinylester, Polybutadien, einem Copolymer von zwei oder mehreren davon und einem Gemisch von zwei oder mehreren davon. Die zuvor genannten Bindemittel haben sich als besonders geeignet zur Bereitstellung eines biologisch abbaubaren Verbundmaterials herausgestellt. Besonders vorteilhaft an Polyurethan und/oder Polyactid ist, dass diese zu einem hohen Anteil, insbesondere von wenigstens 80 Gew.-% bezogen auf das Gesamtgewicht des Bindemittels, von nachwachsenden Ressourcen gewinnbar sind.

Als besonders bevorzugt hat es sich herausgestellt, ein biogenes Polymer zu verwenden. Besonders vorteilhaft an dem Einsatz von biogenen Bindemitteln ist, dass diese frei von chemischen Syntheseverfahren gewonnen werden können und somit bereits in ihrer Herstellung zur Umweltverträglichkeit des späteren Verbundmaterials beitragen. Als besonders bevorzugt hat sich die Auswahl eines biogenen Polymers aus der Gruppe bestehend aus Kautschuk, insbesondere Naturkautschuk, Zellulose und deren Derivate, Stärke und deren Derivate, einem Copolymer von zwei oder mehreren davon und einem Gemisch von zwei oder mehreren davon, herausgestellt.

Es hat sich herausgestellt, dass insbesondere der Einsatz von Styrol-Acrylat als Bindemittel die biologische Abbaubarkeit des Verbundmaterials deutlich beeinträchtigt. Insbesondere liegt Styrol-Acrylat in der Regel in feinverteilter Form im Verbundmaterial und nach der Zersetzung in Form von relativ kleinen Plastikpartikeln (Mikroplastik), insbesondere mit einem Äquivalenzdurchmesser von weniger als 0,1 mm, vor, die auf Grund der kleinen Partikelgröße nicht mit konventionellen Kompost-Siebanlagen ausgesiebt werden können und das Material somit nachhaltig kontaminieren. Insofern wurde festgestellt, dass bereits die Reduzierung des Styrol-Acrylat-Anteils gegenüber dem Stand der Technik zu einer Erhöhung der biologischen Abbaubarkeit des Verbundmaterials führt. Insofern hat es sich als vorteilhaft herausgestellt ein Styrol- und/oder Acrylat- freies Bindemittel einzusetzen.

Alternativ oder zusätzlich zum biologisch abbaubaren Anteil des Bindemittels kann vorgesehen sein, dass das Bindemittel ein Polymer ist, das mindestens 50 Gew.-%, 60 Gew.-%. 70 Gew.-%, 80 Gew.-%, 90 Gew.-%, 95 Gew.-% oder 99Gew.-% eines ethylenisch ungesättigten Monomers mit zumindest einer Carbonsäureestergruppe enthält. Es kann vorgesehen sein, dass das Bindemittel ein Polymer ist, das aus einem ethylenisch ungesättigten Monomer besteht.

Es kann vorgesehen sein, dass das Bindemittel ein Polyalkylacrylat, ein Polyalkyl(meth)acrylat, ein Polyurethan, ein Vinylacetat oder Copolymere oder Mischungen von aus zwei oder mehr davon ist. Es kann vorgesehen sein, dass das Bindemittel ein Polyalkylacrylat, ein Polyurethan oder Copolymere oder ein Gemisch aus zwei oder mehr davon ist. Es kann vorgesehen sein, dass das Bindemittel ein Polyalkylacrylat, insbesondere ein unvernetztes Polyalkylacrylat, ist.

Es kann vorgesehen sein, dass das Polyurethan ein Polyesterpolyurethan, insbesondere ein anionisches und/oder aliphatisches Polyesterpolyurethan, ein Polyetherpolyurethan oder ein Gemisch aus zwei oder mehreren davon ist. Es kann vorgesehen sein, dass das Bindemittel ein Copolymer eines Polyesterpolyurethans und eines Polyalkylacrylat, ein Copolymer eines Polyetherpolyurethans und eines Polyalkylacrylats, ein Copolymer eines Polyesterpolyurethans, eines Polyetherpolyurethans und eines Polyalkylacrylats, oder ein Gemisch aus zwei oder mehr davon ist.

Es kann vorgesehen sein, dass das Bindemittel Poly-Ci bis C₁₂-Alkylacrylat ist. Es kann vorgesehen sein, dass das Bindemittel Poly-Ci bis C₁₀-Alkylacrylat ist. Es kann vorgesehen sein, dass das Bindemittel Poly-Ci bis C₈-Alkylacrylat ist. Es kann vorgesehen sein, dass das Bindemittel Poly-C₂ bis C₆-Alkylacrylat ist. Es kann vorgesehen sein, dass das Bindemittel Poly-C₃ bis C₅-Alkylacrylat ist. Es kann vorgesehen sein, dass das Bindemittel Poly-C₄ -Alkylacrylat (Polybutylacrylat) ist. Es kann vorgesehen sein, dass das Polybutylacrylat eine Glasübergangstemperatur Tg von - 50°C bis -5°C, vorzugsweise von -40°C bis -20°C, hat.

Es kann vorgesehen sein, dass das Bindemittel Methacrylat, Ethylacrylat, n-Butylacrylat, Isobutylacrylat, tert.-Butylacrylat, Hexylacrylat, 2-Ethylhexylacrylat und/oder Laurylacrylat enthält oder aus einem oder mehrerer derselben besteht.

Es kann vorgesehen sein, dass das Bindemittel ein anionisches Polyalkylacrylat umfasst oder aus diesem besteht, wobei das Polyalkylacrylat wie oben definiert ausgewählt sein kann, insbesondere das Bindemittel ein anionisches Polybutylacrylat umfasst oder ist.

Es kann vorgesehen sein, dass das Bindemittel eine Glasübergangstemperatur (Tg) ausgewählt aus der Gruppe, bestehend aus weniger als 0°C, weniger als -5°C, weniger als -10°C, weniger als -15 °C, weniger als -20 °C, weniger als -25 °C, weniger als -28 °C, von -40°C bis -20°C, von -35°C bis -25°C, von -32 °C bis -28°C, beispielsweise etwa -°C, jeweils bestimmt durch Dynamische Differenzkalorimetrie (DSC), hat.

Es kann vorgesehen sein, dass das Bindemittel eine Viskosität von höchstens 200 mPa^{∗}s, beispielsweise von 20 bis 200 mPa^{∗}s nach ISO 1652, Brookfiled RVT Spindel 1/Umin 10/Faktor 5 hat.

Es kann vorgesehen sein, dass das Bindemittel ein spezifisches Gewicht von 1.00 bis 1.10 bei 25°C, insbesondere 1.02 bis 1.06 bei 15°C, beispielsweise etwa 1.04 °C hat.

Durch die im vorangehenden aufgeführten Bindemittel kann eine besonders vorteilhafte Formstabilität erreicht werden. Insbesondere kann gegenüber alternativen Bindemitteln, insbesondere gegenüber Styrol-Acrylat-basierten Bindemitteln, die Formstabilität des Verbundmaterials bei höheren Temperaturen verbessert werden.

Insbesondere beträgt der Anteil des zuvor beschriebenen Polymers, des biologisch abbaubaren Anteils und/oder des biogenen Anteils wenigstens 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, oder 99 Gew.-%, bezogen auf das Gesamtgewicht des Bindemittels.

Der Anteil des Bindemittels, bezogen auf das Gesamtgewicht des Verbundmaterials, beträgt vorzugsweise wenigstens 3 Gew.-%, 5 Gew.-%, 10 Gew.-%, 15 Gew.-%, 20 Gew.-% oder 25 Gew.-% und/oder höchstens 60 Gew.-%, 50 Gew.-%, 40 Gew.-%, 35 Gew.-% oder 30 Gew.-%. Insbesondere beträgt der Anteil des Bindemittels, bezogen auf das Gesamtgewicht des Verbundmaterials, 5 bis 60 Gew.-%, vorzugsweise 15 bis 50 Gew.-%, besonders bevorzugt 20 bis 35 Gew-%. Insbesondere die Untergrenze von 20 Gew.-% hat sich als vorteilhaft erwiesen, um dem Verbundmaterial für die nachfolgend beschriebenen Einsatzgebiete die erforderlichen mechanische Eigenschaften, wie Flexibilität, zu verleihen. Ein Überschreiten der Obergrenze von 60 Gew.-% kann insbesondere dazu führen, dass das Bindemittel nicht mehr vollständig in dem Fasermaterial gebunden wird, was zu Produktionsproblemen führen kann. Ferner kann ein Überschreiten der Obergrenze von 35 Gew.-%, insbesondre 50 Gew.-%, den für das Fasermaterial verfügbaren Anteil derart reduzieren, dass das Verbundmaterial eine zu geringe Festigkeit für die nachfolgend beschriebenen Einsatzgebiete aufweist.

Insbesondere durch Einhaltung der oberen Grenzen für das Bindemittel kann sichergestellt werden, dass das Verbundmaterial keine durchgängige Phase bildet, die das Austreten von Aromastoffen verhindern oder zumindest erschweren könnte. Insbesondere kann durch Einhaltung der Obergrenze des Verbundmaterials eine gewisse Durchlässigkeit für Aromastoffe bereitgestellt werden, was die Wahrnehmbarkeit der Gerüche verbessert.

Es kann vorgesehen sein, dass das Verbundmaterial ferner zumindest ein Additiv umfasst. Es kann vorgesehen sein, dass das Additiv in einer Menge von mindestens 1 Gew.-%, 2 Gew.-%, 5 Gew.-%, 10 Gew.-%, 15 Gew.-%, 20 Gew.-%, 23 Gew.-% oder 25 Gew.-% und/oder von höchstens 35 Gew.-%, 30 Gew.-%, 28 Gew.-%, 25 Gew.-%, 23 Gew.-% oder 20 Gew.-%, bezogen auf das Gesamtgewicht des Verbundmaterials, umfasst ist. Insbesondere kann das Additiv in einer Menge zwischen 5 Gew.-% und 35 Gew.%, vorzugsweise zwischen 10 Gew.-% und 30 Gew.-%, besonders bevorzugt zwischen 13 Gew.-% und 25 Gew.-%, bezogen auf das Gesamtgewicht des Verbundmaterials, umfasst sein.

Das Additiv kann ausgewählt sein aus einem anorganischen Salz, einem Konservierungsmittel, einem Farbmittel, einem Gleitmittel, einem Weichmacher, Flammschutzmittel, insbesondere einem halogen-, bor- und antimonfreien Flammschutzmittel, einem Fettungsmittel, einem Gerbstoff, einem Nachgerbstoff, einem Flockungsmittel, einem Fixiermittel, einem Entwässerungshilfsmittel, einem Nassfestmittel, einem Füllstoff oder Mischungen von zwei oder mehr davon.

Insbesondere kann vorgesehen sein, dass das anorganische Salz Aluminiumsulfat ist. Es kann hierbei vorgesehen sein, dass das Gewichtsverhältnis von Fasermaterial zu anorganischem Salz eines ist, das ausgewählt ist aus der Gruppe, bestehend aus 1:1 bis 10:1; 1,5:1 bis 8:1; 1,5:1 bis 5:1; 2:1 bis 4:1; insbesondere etwa 2,8:1.

Alternativ oder zusätzlich kann vorgesehen sein, dass das Verbundmaterial zumindest ein Additiv umfasst, das ausgewählt ist aus der Gruppe, bestehend aus einem Fettungsmittel, insbesondere einem oder mehreren Triglyceridestern mit langkettigen (> 10 Kohlenstoffatome) gesättigten und/oder einfach oder mehrfach ungesättigten Fettsäuren, wobei die Triglyceridester sowohl pflanzlicher oder tierischer Herkunft sein können, und/oder sulfatierter natürlicher Öle. Es kann hierbei vorgesehen sein, dass das Gewichtsverhältnis von Fasermaterial zu Fettungsmittel eines ist, das ausgewählt ist aus der Gruppe, bestehend aus 1,5:1 bis 10:1; 2,5:1 bis 7,5:1; 4:1 bis 6,5:1; 4,5:1 bis 5,5:1; insbesondere etwa 5:1.

Beispielsweise dann, wenn das Fasermaterial Lederfasern umfasst oder aus diesen besteht, kann vorgesehen sein, dass der Gerbstoff oder Nachgerbstoff ein als (Nach-) Gerbstoff-geeignetes Pflanzenextrakt ist, beispielsweise ein Quebracho-Extrakt ist. Es kann hierbei vorgesehen sein, dass das Gewichtsverhältnis von Fasermaterial zu (Nach)gerbstoff eines ist, das ausgewählt ist aus der Gruppe, bestehend aus 2:1 bis 12:1; 3:1 bis 10:1; 4:1 bis 9:1; 5:1 bis 8:1; 6:1 bis 7:1; insbesondere etwa 6,7:1; beispielsweise etwa 6,66:1.

Es kann vorgesehen sein, dass ein Gemisch von Additiven in dem Verbundmaterial umfasst ist, wobei das Gemisch von Additiven einen Gerbstoff, ein Fettungsmittel und/oder ein anorganisches Salz umfasst, etwa in einer Menge von zumindest 90 Gew.-%, bezogen auf das Gesamtgewicht des Gemischs von Additiven, umfasst, vorzugsweise (im Wesentlichen) aus diesen besteht.

Ferner hat sich herausgestellt, dass insbesondere der Einsatz von Elastomeren in dem Bindemittel von Vorteil ist. Besonders bevorzugt umfasst, insbesondere besteht, das Bindemittels daher aus einem Elastomer, insbesondere aus Kautschuk, insbesondere Naturkautschuk. Durch den Einsatz von Elastomeren kann dem Verbundmaterial insbesondere ein elastisches Verhalten verliehen werden. Dies ist insbesondere bei Ausführungsformen, wie Hinterkappen und Taschen von Vorteil, bei denen gewünscht ist, dass Sie nach einer Verformung wieder in den ursprünglichen Zustand zurückkehren. Das Maß an Elastizität, das bei derartigen Anwendungen gefordert wird kann insbesondere als sprungelastisch bezeichnet werden. Bei dem Einsatz des Verbundmaterials für Beschichtungen kann eine zu hohe Elastizität jedoch zu Problemen bei dem Verarbeiten des Verbundmaterials an scharfen Kanten führen. An diesen kann ein zu elastisches Verbundmaterial zurückspringen, sodass kein enger Verlauf des Verbundmaterials entlang der Kante gewährleistet werden kann. Es wurde erkannt, dass dieses Problem durch die Zugabe eines Weichmachers, d.h. durch die Verwendung eines Weichmachers als Additiv, gelöst werden kann. Vorzugsweise wird als Weichmacher ein Fettungsmittel, insbesondere in Art und/oder Menge wie zuvor beschrieben, eingesetzt.

Insbesondere beim Einsatz des Verbundmaterials für Beschichtungen, wie Ummantelungen, Kaschierungen und/oder Belegen, wurde es als vorteilhaft erkannt, einen Weichmacher einzusetzen. Dadurch kann ein knetartiges Verformungsverhalten bereitgestellt werden, wodurch das Verbundmaterial eng entlang von scharfen Kanten verlaufen kann. Ein derartiges elastisches Verhalten kann insbesondere als elastoplastisch bezeichnet werden. Dadurch können weitere Einsatzgebiete des Verbundmaterials erschlossen werden.

Als Farbmittel kann beispielsweise ein schwarzes Farbmittel, etwa eine Rußpigmentdispersion, oder ein Farbstoff, beispielsweise ein gelber oder ein oranger Farbstoff, vorgesehen sein.

Als Flammschutzmittel kann beispielsweise Blähgraphit, roter Phosphor, Aluminiumhydroxid oder Mischungen von zwei oder mehr davon vorgesehen sein.

Insbesondere dann, wenn das Fasermaterial Papierfasermaterial umfasst oder aus diesen besteht, kann vorgesehen sein, dass das Verbundmaterial zumindest ein Additiv umfasst, das ausgewählt ist aus der Gruppe, bestehend aus einem Flockungsmittel, einem Fixiermittel, einem Entwässerungshilfsmittel, einem Nassfestmittel und einem Füllstoff.

Die Erfindung betrifft ferner ein flächiges, insbesondere bahnförmiges, Erzeugnis, das das erfindungsgemäße Verbundmaterial umfasst. Vorzugsweise beträgt der Anteil des Verbundmaterials in dem Erzeugnis wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-%, 99 Gew.-% oder 100 Gew.-% des Erzeugnisses.

Unter einem flächigen Erzeugnis ist insbesondere ein Erzeugnis zu verstehen, dessen Längsstreckung und Breitenerstreckung deutlich größer ist als dessen Höhenerstreckung. Unter deutlich größer ist insbesondere zu verstehen, dass die Längserstreckung und/oder die Breitenerstreckung um wenigstens das dreifache, fünffache, zehnfache, zwanzigfache, dreißigfache oder fünfzigfache größer ist als die Breitenerstreckung. Insbesondere definieren die Längserstreckung und die Breitenerstreckung des flächigen Erzeugnisses eine planare Oberfläche des Erzeugnisses, die gebogen oder gerade sein kann. Insbesondere kann das flächige Erzeugnis ein bahnförmiges Erzeugnis sein. Unter einem bahnförmigen Erzeugnis ist insbesondere ein flächiges Erzeugnis zu verstehen, dessen Längserstreckung größer, insbesondere wenigstens doppelt so groß, dreifach so groß, fünffach so groß oder zehnfach so groß, ist als dessen Breitenerstreckung. Die Längserstreckung des bahnförmigen Erzeugnisses kann auch als Bahnerstreckung bezeichnet werden. Die Bahnerstreckung kann insbesondere endlos sein. Insbesondere kann ein bahnförmiges Erzeugnis auf eine Rolle gewickelt sein. Alternativ kann ein bahnförmiges Erzeugnis in Platten geschnitten werden. Insbesondere kann das Erzeugnis eine Faserbahn sein. Unter einer Faserbahn ist insbesondere ein Erzeugnis zu verstehen, das an sich gegenüberliegenden Oberflächen, insbesondere der sich gegenüberliegenden planaren Oberflächen und/oder sich gegenüberliegender Kanten, Fasermaterial aufweist. Insbesondere ist unter einer Faserbahn ein Erzeugnis zu verstehen, dass von Fasermaterial durchsetzt ist und/oder in dem das Fasermaterial homogen verteilt ist. Unter "durchsetzt" ist insbesondere zu verstehen, dass sich das Fasermaterial entlang der gesamten Dicke, Länge und/oder Breite des Erzeugnisses verteilt, insbesondere homogen verteilt.

Die Höhenerstreckung des flächigen Erzeugnisses kann auch als Stärke bezeichnet werden. Vorzugsweise umfasst das flächige Erzeugnis eine Stärke zwischen 0,2 mm und 7 mm, besonders bevorzugt zwischen 0,3 mm und 5 mm, insbesondere zwischen 0,5 mm und 3 mm. Alternativ oder zusätzlich weist das Erzeugnis eine Stärke von wenigstens 0,3 mm, 0,5 mm oder 1 mm und/oder von höchstens 10 mm, 8 mm, 7 mm, 6 mm, 5 mm, 4 mm oder 3 mm auf.

Vorzugsweise weist das Erzeugnis bei der Verwendung als Beschichtung, insbesondere von Paneelen, oder als Belag, insbesondere Tapete, eine Stärke zwischen 0,2 mm und 5 mm, insbesondere 0,3 mm und 3 mm, besonders bevorzugt zwischen 0,5 mm und 1 mm auf. Alternativ dazu weist das Erzeugnis insbesondere bei der Verwendung zur Herstellung von Überzugsmaterial, insbesondere von Kissenbezügen, Sitzbezügen, Abdeckungen von Sitzrückschalen und Modeaccessoires insbesondere eine Stärke zwischen 0,5 mm und 2 mm, vorzugsweise zwischen 0,8 mm und 1,4 mm auf. Alternativ dazu weist das Erzeugnis insbesondere bei dessen Verwendung für Hinterkappen eine Stärke zwischen 0,5 mm und 3 mm, vorzugsweise zwischen 0,8 mm und 2,5 mm auf. Bei Lauf- und Brandsohlen weist das Erzeugnis insbesondere eine Stärke zwischen 1,5 mm und 5 mm, vorzugsweise zwischen 1,8 mm und 4 mm, auf. Bei Rahmen und Absätzen weist das Erzeugnis insbesondere eine Stärke zwischen 1 mm und 8 mm, vorzugsweise zwischen 2 mm und 7 mm auf. Bei Wandelementen, wie Raumtrennern, weist das Erzeugnis insbesondere eine Stärke zwischen 2 mm und 8 mm, vorzugsweise zwischen 3 mm und 7 mm, zwischen 4 mm und 7 mm, zwischen 5 mm und 7 mm oder zwischen 6 mm und 7 mm, auf.

In einer bevorzugten Ausführung ist das Erzeugnis von dem Aromaträger durchsetzt, insbesondere gleichmäßig durchsetzt. Unter durchsetzt ist insbesondere zu verstehen, dass der Aromaträger im Wesentlichen homogen in dem Verbundmaterial und/oder dem Erzeugnis verteilt ist. Im Gegensatz zu Erzeugnissen, bei denen der Aromaträger, beispielsweise ein ätherisches Öl, lediglich auf die Oberfläche des Erzeugnisses aufgetragen wird, wird dadurch sichergestellt, dass auch an den Schnittflächen des Erzeugnisses der Aromaträger sichtbar ist. Dies ist insbesondere bei Verwendungen des flächigen Erzeugnisses von Vorteil bei denen es für die entsprechende Verwendung zugeschnitten wird. Ohne die erfindungsgemäße Lösung müssten bei diesen Verwendungen die Schnittkanten separat mit Aromaträgern versehen werden, um eine entsprechende Optik und/oder einen entsprechenden Geruch zu gewährleisten. Ferner wird erreicht, dass die Geruchswahrnehmung des Erzeugnisses unabhängig von dessen Ausrichtung bereitgestellt werden kann. Insbesondere können so zum Beispiel beidseitig verwendbare Tapeten aus dem Verbundmaterial gebildet werden, die, unabhängig von der im angebrachten Zustand dem Raum zugewandten Seite, gleichermaßen Aromastoffe freisetzen können. Alternativ oder zusätzlich kann das Erzeugnis ein Raumteiler sein, der von dem Aromaträger durchsetzt ist, sodass der Aromaträger an den, insbesondere beiden, dem Raum zugewandten Seiten des Raumteiles Aromastoffe freisetzen und/oder ein veganes Aussehen haben kann.

Vorzugsweise weist wenigstens eine Oberfläche des Erzeugnisses eine Beschichtung auf. Insbesondere ist die Beschichtung eine Farbschicht und/oder eine Schutzschicht, die insbesondere Polyurethan oder Polyacrylat aufweist. Alternativ oder zusätzlich ist die Oberfläche geprägt. Durch derartige Beschichtungen kann insbesondere die Oberfläche des Erzeugnisses veredelt werden, was dessen Anwendungsgebiete nochmals deutlich erweitert. Insbesondere kann beispielsweise durch eine Marmorierung der Oberfläche eine lederähnliche Optik erzeugt werden.

Die Erfindung betrifft ferner die Verwendung des erfindungsgemäßen Verbundmaterials oder des zuvor beschriebenen Erzeugnisses zur
- Beschichtung, insbesondere Ummantelung oder Kaschierung, insbesondere von
   - Paneelen, wie Wandpaneelen, Bodenpaneelen, Deckenpaneelen oder Fensterrahmenpaneelen, insbesondere im Bereich von Fahrzeuginnenräumen, Wohnräumen und Gewerberäumen, oder von
   - Einrichtungs- und Gebrauchsgegenständen, wie Möbeln, Dekorationen, Elektrogeräten und Handtaschen, insbesondere in der Modeindustrie, und/oder
- zur Herstellung von
   - Belägen, wie Wandbelägen, insbesondere Tapeten, Bodenbelägen, Deckenbelägen, Fensterbelägen oder Türseitenverkleidungen insbesondere im Bereich von Fahrzeuginnenräumen, Wohnräumen und Gewerberäumen, von
   - Wandelementen, wie Raumtrennern, insbesondere im Bereich von Fahrzeuginnenräumen, Wohnräumen und Gewerberäumen, von
   - Überzugsmaterial, wie Kissenbezüge, Sitzbezüge oder Abdeckungen, insbesondere von Sitzrückenschalen, insbesondere im Fahrzeuginnenbereich, von
   - Schuhkomponenten, insbesondere Hinterkappen, Absätzen, Lauf- und Brandsohlen, und/oder von
   - Modeaccessoires, Produkte zur Ausstattung von Verkehrsmitteln oder Bauprodukten.

Ferner betrifft die Erfindung für die zuvor beschriebenen Verwendungen hergestellte Erzeugnisse und/oder Beschichtungen.

Insbesondere bei Beschichtungen, Belägen und/oder Überzugsmaterial, insbesondere von Einrichtungs- und Gebrauchsgegenständen, kann die Prägung der Oberfläche zur Erzeugung einer lederähnlichen Optik, insbesondere in der Modeindustrie, vorteilhaft sein. Alternativ oder zusätzlich kann eine Textil-Prägung eingesetzt werden, die dem Erzeugnis insbesondere eine textilähnliche Optik, beispielsweise die eines Gewebes, verleiht. Alternativ oder zusätzlich kann eine technische Prägung, beispielsweise eine Carbonprägung, eingesetzt werden, die dem Erzeugnis die Optik eines Hochleistungsmaterials, wie Carbon, verleiht. Im Gegensatz dazu kann insbesondere bei der Ummantelung oder Kaschierung in Gewerberäumen das Verzichten auf eine Prägung sinnvoll sein, um das durch den Einsatz der Pflanzenfasern erzeugte "veganen", also pflanzenbasierten, Eindruck nicht zu beeinträchtigen.

Ein weiterer Aspekt der Erfindung betrifft ein Verfahren zur Herstellung eines Verbundmaterials oder eines flächigen Erzeugnisses, wobei das Verbundmaterial und das Erzeugnis wie zuvor beschrieben ausgebildet sein kann. Das Verfahren umfasst die Schritte:
a) Bereitstellen eines Fasermaterials, das vorzugsweise Pflanzenfasermaterial umfasst;
b) Bereitstellen eines Aromaträgers;
c) Bereitstellen eines Bindemittels;
d) Vermengen des Bindemittels, des Fasermaterials und eines Fluids, insbesondere Wasser, zu einem Gemisch, insbesondere Faserbrei; und
e) Trocknen des Gemisches, um das Verbundmetarial zu erhalten.

Gemäß einer Alternative dieses Aspekts der Erfindung wird der Aromaträger in Schritt d) mit in das Gemisch vermengt. Dadurch kann insbesondere das zuvor beschriebene, von dem Aromaträger durchsetzte Erzeugnis bereitgestellt werden. Bei dieser Alternative wird bevorzugt ein pulverförmiger oder faserförmiger Aromaträger eingesetzt. Alternativ oder zusätzlich kann der Aromaträger während oder nach dem Schritt e) auf das Verbundmaterial aufgetragen werden. Bei dieser Alternative wird bevorzugt ein Aromaträger in Form von ätherischem Öl eingesetzt.

In Schritt a) wird bevorzugt Pflanzenfasermaterial bereitgestellt. Es kann aber auch eine Mischung aus Pflanzenfasermaterial mit Tierfasermaterial oder reines Tierfasermaterial bereitgestellt werden. Insbesondere kann das Fasermaterial wie im Zusammenhang mit den das Verbundmaterial betreffenden Aspekt der Erfindung beschrieben ausgewählt werden. Insbesondere kann Schritt a) das Bereitstellen von Pflanzenfasermaterial der Ordnung Poales, das Bereitstellen von rezykliertem Fasermaterial, das Bereitstellen Holzfasermaterial, das Bereitstellen von Pflanzenfasermaterial und/oder das Bereitstellen von Pflanzenfasermaterial und einem Verstärkungsfasermaterial aufweisen.

Insbesondere kann Schritt a) das Bereitstellen von Kämmlingen, Grundbaumwolle, Kardenrückständen, Schlichtfasern, Reißfasern, Papierfasermaterial und/oder Spelzfasermaterial, insbesondere in Form von Baumwolle, Holzfasermaterial und/oder Pflanzenfasermaterial der Gattung der Poales oder Leder, umfassen. Bevorzugt werden die Reißfasern aus Textilien gewonnen, die aus Kleidung, insbesondere Jeansstoffen, Bezügen, Polstermöbeln, Vorhängen, Handtüchern, Bettwäsche, Tischdecken und/oder Putz- und Reinigungstüchern ausgewählt sind.

Alternativ oder zusätzlich werden als Kämmlinge Baumwollkämmlinge verwendet. Besonders bevorzugt sind die Baumwollkämmlinge gefärbt, insbesondere indigogefärbt. Ferner werden die Baumwollkämmlinge vorzugsweise aus der Weberei von Jeansstoffen gewonnen.

Alternativ oder zusätzlich handelt es sich beim Papierfasermaterial um Papierfasermaterial, das aus Papierbehältern, insbesondere aus To-Go-Bechern, insbesondere Kaffeebechern, To-Go-Tellern, Strohhalmen oder ähnlichen Einwegprodukten aus Papier gewonnen werden. Ferner kann es sich alternativ oder zusätzlich beim Papierfasermaterial um aus Papierverpackungen, wie Lebensmittelverpackungen, oder aus Papierblättern, wie Papier aus Zeitungen, Schreibpapier oder Papier aus Büchern, gewonnenes Papierfasermaterial handeln. Insbesondere wird das Papierfasermaterial durch Zerkleinerung derartiger Gegenstände, insbesondere in einer Schneidmühle und/oder in einem Refiner in das Papierfasermaterial überführt. Bevorzugt wird Papierfasermaterial der Gruppen 2 bis 5 gemäß DIN EN 643:2014-11. Besonders bevorzugt handelt es sich bei dem Papierfasermaterial um Papierfasermaterial der Gruppe 2 oder 5 gemäß DIN EN 643:2014-11. Insbesondere kann Papierfasermaterial der Klassen 2.10.00, 2.11.00, 5.05.00, 5.05.01, 5.06.00, 5.06.01, 5.07.00, 5.07.01, 5.14.00 und/oder 5.14.01 gemäß DIN EN 643:2014-11 eingesetzt werden.

Es kann vorgesehen sein, dass das Fasermaterial Lederfasern umfasst oder aus diesen besteht. Beispielsweise können die Lederfasern zerkleinertes Leder und Falzspäne umfassen. Insbesondere können Lederfasern verwendet werden, die bei der Vorgerbung (wet blue, wet white, usw.), dem Crust oder fertigem Leder bei den typischen Arbeitsgängen, insbesondere Falzen, Beschneiden, Spalten, Schleifen, Stanzen, anfallen. Beispielsweise können die Lederfasern von Stanzresten gegerbter Leder, Chromfalzspänen oder Aldehydfalzspänen stammen und/oder beispielsweise auch aus Lederfaserstoffschleifstaub gewonnen werden. Alternativ oder zusätzlich handelt es sich bei dem Ausgangsstoff Lederfasermaterial um nicht zugerichtetes Lederfasermaterial, insbesondere um aus Crustleder gewonnenes Lederfasermaterial. Insbesondere handelt es sich um gegerbtes Lederfasermaterial, insbesondere ausgewählt aus einem oder mehreren aus der Gruppe bestehend aus vegetabilem Crustleder, wie Stanzresten und Abschnitten, chromgegerbten Crustleder und aldehydgegerbtem Crustleder. Besonders bevorzugt wird für das Lederfasermaterial nicht zugerichtetes, nicht gefärbtes und insbesondere gegerbtes Lederfasermaterial eingesetzt, insbesondere ausgewählt aus einem oder mehreren aus der Gruppe bestehend aus vegetabilem, nicht gefärbtem Crustleder, chromgegerbten, nicht gefärbtem Crustleder, aldehydgegerbtem, nicht gefärbtem Crustleder, Chromfalzspänen, Aldehydfalzspänen und sonstigen Falzspänen. Es hat sich herausgestellt, dass nicht gefärbtes Lederfasermaterial die Farbgestaltung des Verbundmaterials erheblich vereinfacht, sodass größere Gestaltungsspielräume geschaffen werden. Die Erfinder haben allerdings auch erkannt, dass beim in Kauf nehmen gewisser Einschränkungen bei der Farbgestaltung auch nicht zugerichtetes, gefärbtes Lederfasermaterial und sogar zugerichtetes Lederfasermaterial, insbesondere Fasermaterial aus durchgefärbtem Fertigleder, beispielsweise von Stanzresten und Abschnitte, eingesetzt werden kann. Die zuvor beschriebenen Ledersekundärstoffe können insbesondere auf Grund ihrer Färbung und/oder der für die Gerbung eingesetzte Chemikalien nur bedingt wiederverwendet werden. Durch die vorliegende Erfindung wurden weitere Optionen für deren Wiederverwertung geschaffen und somit zumindest teilweise deren Entsorgungsproblem gelöst.

Schritt d) kann das Zerkleinern des Fasermaterials auf einen gewünschten Faserlängenbereich, insbesondere wie im Zusammenhang mit dem Hauptfaseranteil, Kurzfaseranteil und/oder Langfaseranteil beschrieben, umfassen. Dabei kann das Zerkleinern insbesondere ein Zerkleinern mittels einer Schneidmühle, insbesondere Feinschneidmühle, und/oder mittels eines Refiners, insbesondere Scheibenrefiners und/oder Kegelrefiners, umfassen. Es hat sich herausgestellt, dass der Einsatz von Pflanzenfasern die notwendige Verarbeitungszeit im Refiner (im Stand der Technik 2 - 10 Stunden) gegenüber Lederfasern reduzieren kann, insbesondere auf 30 bis 50 Minuten.

Für die Zerkleinerung im Refiner kann ein Gewichtsverhältnis von 2 - 5 Gew.-% Fasermaterial zu 95 - 98 Gew.-% Wasser zielführend sein. Schritt d) kann das Vermengen des Bindemittels und/oder der Aromaträgers mit dem Fasermaterial vor, nach oder während dem Zerkleinern umfassen.

Der Aromaträger kann wie im Zusammenhang mit dem das Verbundmaterial betreffenden Aspekt der Erfindung beschrieben bereitgestellt werden. Insbesondere kann der Aromaträger in Form eines ätherischen Öls oder in Form von Rückständen, insbesondere von Pressrückständen, Extraktionsrückstände und/oder Destillationsrückstände, insbesondere Kaffeesatz, bereitgestellt werden. Besonders bevorzugt wird Aromaträger in Form von Pressrückständen, Extraktionsrückstände und/oder Destillationsrückständen, insbesondere in Form von Kaffeesatz, Öl-Pressrückständen und/oder Tee- Extraktionsrückständen, bereitgestellt. Insbesondere beim Einsatz von Kaffeesatz als Aromaträger kann dieser ohne Vorbehandlung dem Fasermaterial zugeführt werden. Vorzugsweise werden Kaffeesatz und Fasermaterial mit Wasser vermengt und gemeinsam, insbesondere mittels Refiner, zerkleinert. Auch beim Einsatz von Aromaträgern in Form von Öl-Pressrückständen und/oder Tee-Extraktionsrückständen, kann der Aromaträger in der Regel zumindest ohne vorgelagerten Zerkleinerungsschritt direkt mit dem Fasermaterial vermengt und verarbeitet werden.

Insbesondere umfasst Schritt d) das Vermengen des Bindemittels, des Fasermaterials, des Aromaträgers und von Fluid zu einem Gemisch. Sofern vorab das Fasermaterial und/oder der Aromaträger im Refiner zerkleinert wurde, kann das Fasermaterial und/oder der Aromaträger bereits mit Wasser vermengt sein, sodass dem Gemisch nur noch das Bindemittel zugefügt werden muss.

Schritt d) kann ferner das Zugeben zumindest eines Additivs umfassen, das eines oder mehrere der im Vorangehenden im Detail beschriebenen Additive sein kann. Das Vermischen gemäß Schritt d) kann insbesondere in einer Mischvorrichtung, wie einer Bütte, erfolgen. Das Gewichtsverhältnis von Wasser zu Fasermaterial kann hierbei eines sein, das ausgewählt ist aus der Gruppe, bestehend aus 10:1 bis 100:1, 15:1 bis 75:1 oder 20:1 bis 50:1, beispielsweise 40:1.

Das Gemisch, das in Schritt d) erhalten wird, kann ein Faserbrei sein, der durch gemeinsames Mahlen des Fasermaterials und des Wassers, beispielsweise mittels eines Kegelrefiners oder Scheibenrefiners, erhalten werden kann. Der Faserbrei kann auch als Stoffbrei bezeichnet werden.

Das in Schritt d) erhaltene Gemisch wird mit dem Bindemittel und optional mit einem oder mehreren der im vorangehenden beschriebenen Additiven versetzt, beispielsweise chargenweise versetzt.

Es kann vorgesehen sein, dass ein Gewichtsverhältnis von Fasermaterial zu Bindemittel in einem Bereich zwischen 1:1 bis 3:1, besonders bevorzugt zwischen 1:1 bis 2.5:1, insbesondere 2:1 bis 1,1:1, ist. Als Bindemittel kann eines oder mehrere der im Vorangehenden im Detail beschriebenen Bindemittel, etwa ein Bindemittel, das Naturkautschuk umfasst, verwendet werden. Es kann vorgesehen sein, dass das Bindemittel in Form einer Suspension, Dispersion, Emulsion etc. zugegeben wird, beispielsweise in Form einer Emulsion, umfassend das Bindemittel und ein geeignetes Emulsionsmittel, mit einem Feststoffgehalt von 40 bis 60 Gew.-%, insbesondere 43.5 bis 55 Gew.-%, beispielsweise 43.5 Gew.-% bis 44.5 Gew.-%.

Es kann vorgesehen sein, dass ein Gewichtsverhältnis von Fasermaterial zu zusätzlich zum Fasermaterial vorliegendem Aromaträger, insbesondere Kaffeesatz, in einem Bereich zwischen 2/1 und 1/2, zwischen 1,5/1 und 1/1,5, zwischen 1,3/1 und 1/1,3, zwischen 1,1/1 und 1/1,1, beispielsweise von 1/1, ist.

Es kann vorgesehen sein, dass das Fettungsmittel, eines ist (oder ein solches umfasst, das ausgewählt ist aus der Gruppe, bestehend aus einem oder mehreren Triglyceridestern mit langkettigen (> 10 Kohlenstoffatome) gesättigten und/oder einfach oder mehrfach ungesättigten Fettsäuren, wobei die Triglyceridester sowohl pflanzlicher oder tierischer Herkunft sein können, und/oder sulfatierter natürlicher Öle. Es kann hierbei vorgesehen sein, dass das Gewichtsverhältnis von Fasermaterial zu Fettungsmittel eines ist, das ausgewählt ist aus der Gruppe, bestehend aus 3:1 bis 20:1; 5:1 bis 15:1; 8:1 bis 13:1; 9:1 bis 11:1; insbesondere etwa 10:1.

Es kann vorgesehen sein, dass der Gerbstoff ein vegetabiler Gerbstoff, etwa ein als (Nach-) Gerbstoff-geeignetes Pflanzenextrakt ist, beispielsweise ein Quebracho-Extrakt, ist. Es kann hierbei vorgesehen sein, dass das Gewichtsverhältnis von Fasermaterial zu Gerbstoff eines ist, das aus der Gruppe ausgewählt ist, bestehend aus 2:1 bis 12:1; 3:1 bis 10:1; 4:1 bis 9:1; 5:1 bis 8:1; 6:1 bis 7:1; insbesondere etwa 6,7:1; beispielsweise etwa 6,66:1.

Es kann vorgesehen sein, dass das anorganische Salz Aluminiumsulfat ist. Es kann hierbei vorgesehen sein, dass das Gewichtsverhältnis von Fasermaterial zu anorganischem Salz eines ist, das ausgewählt ist aus der Gruppe, bestehend aus 2:1 bis 10:1; 3:1 bis 8:1; 4:1 bis 7:1; 5:1 bis 6:1; insbesondere etwa 5,5:1; beispielsweise etwa 5,54:1.

Es kann vorgesehen sein, dass das in Schritt d) erhaltene Gemisch vor dem Schritt e) für einen Zeitraum von etwa zwei Stunden gerührt wird.

Das Trocknen des in Schritt d) erhaltenen Gemischs, d.h. Schritt e) des Verfahrens, kann einen Schritt des Entwässerns umfassen. Das Entwässern kann insbesondere durch Aufbringen des in Schritt d) erhaltenen Gemischs auf ein Siebband durchgeführt werden. Der Entwässerungsprozess kann durch Anlegen eines Vakuums, durch Abpressen und andere geeignete Verfahrensschritte unterstützt werden.

Das Trocknen des in Schritt d) erhaltenen Gemischs, d.h. Schritt e) des Verfahrens, kann einen Trocknungsschritt bei erhöhter Temperatur umfassen, insbesondere einen Trocknungsschritt bei erhöhter Temperatur der dem Entwässern nachgelagert ist. Der Trocknungsschritt bei erhöhter Temperatur kann durch Zufuhr von Warmluft durchgeführt werden, um das zu trocknende Gemisch auf eine Temperatur von beispielsweise 50 bis 100°C, etwa 80 °C, zu erhitzen.

Das Trocknen des Gemischs gemäß Schritt e) umfasst insbesondere ein Trocknen, bis der Wassergehalt des Verbundmaterials derart reduziert ist, dass das Verbundmaterial auf eine Rolle gewickelt, in Platten geschnitten und/oder vor Verderbnis, insbesondere Schimmel, geschützt werden kann. Es hat sich herausgestellt, dass ein Restwassergehalt von 3 bis 20 Gew.-% für die zuvor genannten Faserarten für diese Zwecke zielführend ist. Insbesondere hat sich gezeigt, dass bei Lederfasern ein Restwassergehalt von maximal 15 Gew.-%, insbesondere von maximal 13 oder 12 Gew.-%, das Verbundmaterial vor Verderbnis schützt. Bei Pflanzenfasern, insbesondere bei Baumwolle, hat sich ein Restwassergehalt von maximal 10 Gew.-% als zielführend für den Schutz vor Verderbnis erwiesen.

Vorzugsweise umfasst Schritt e) folgende Unterschritte:
e1) Überführen des Gemischs in einen flächigen, insbesondere bahnförmigen Zustand, und
e2) Trocknen des Gemischs, um ein wickelbares und/oder stapelbares Erzeugnis zu erhalten.

Schritt e1) umfasst vorzugsweise das Fördern, insbesondere mittels Pumpen, des Gemischs auf eine Langsiebentwässerungsmaschine (Foudrinier-Anlage). Schritt e2) umfasst insbesondere wenigstens einen mechanischen (Entwässerung) und/oder einen thermischen (bei erhöhter Temperatur) Trocknungsschritt, insbesondere Entwässerungsschritt. Ein mechanischer Trocknungsschritt kann insbesondere über die Langsiebentwässerungsmaschine erfolgen. Diese umfasst insbesondere ein Endlosförderband mit Durchtrittsöffnung, über die im Gemisch enthaltenes Fluid, insbesondere Wasser, abtropfen, insbesondere entwässern, kann. Die Langsiebentwässerungsmaschine kann eine Keilpresse aufweisen, mit der über eine sich in Förderrichtung verjüngende Keilform die Stärke des Gemischs durch Komprimierung verringert und das Wasser ausgepresst wird. An die Keilpresse können weitere Pressvorrichtungen anschließen, um das Gemisch weiter zu entwässern. An derartige Pressvorrichtungen können thermische Trockenvorrichtungen anschließen, um das Gemisch weiter zu trocknen, bis das gewünschte wickelbare und/oder stapelbare Erzeugnis vorliegt.

Insbesondere durch eine Abfolge, wonach zunächst eine insbesondere größtmögliche mechanische und anschließend eine thermische Trocknung erfolgt, kann der Energieaufwand für die Trocknung reduziert werden, was die Nachhaltigkeit des Verfahrens steigert.

Bei Ausführungsformen, bei denen der Aromaträger während oder nach Schritt e) auf das Verbundmaterial aufgetragen wird kann der Aromaträger zwischen den Schritten e1) und e2) auf das Gemisch aufgetragen werden. Dadurch kann insbesondere ein teilweises Eindringen, beispielsweise von ätherischen Ölen, in das Verbundmaterial erreicht werden. Ferner kann dadurch, insbesondere beim Einsatz von faser- oder pulverförmigen Aromaträgen, eine oberflächliche Verbindung, insbesondere durch Formschluss mit dem Fasermaterial und/oder durch Stoffschluss mit dem Bindemittel bereitgestellt werden. Alternativ oder zusätzlich kann der Aromaträger nach Schritt e), insbesondere nach Schritt e2), auf das Verbundmaterial aufgetragen werden. Bei derartigen Ausführungsformen kann der Aromaträger insbesondere vor, während oder nach einem der nachfolgend beschriebenen Veredelungsschritte f), g) und/oder h) auf das Verbundmaterial aufgetragen werden. Insbesondere kann der Aromaträger bei dieser Ausführungsform während oder nach dem Auftragen einer Beschichtung, insbesondere Farbschicht und/oder Schutzschicht, auf das Erzeugnis aufgetragen werden.

In einer weiteren Ausführungsform umfasst das Verfahren ferner einen oder mehrere der folgenden Schritte:
f) Auftragen einer Beschichtung, insbesondere Farbschicht und/oder Schutzschicht, insbesondere umfassend Polyurethan oder Polyacrylat, auf wenigstens eine Oberfläche des Erzeugnisses; und/oder
g) Prägen von wenigstens einer Oberfläche des Erzeugnisses; und/oder
h) Bearbeiten des Erzeugnisses mit einer Stollmaschine.

Durch das Auftragen der Beschichtung und/oder der Prägung können die zuvor beschriebenen Vorteile erzielt werden. Durch Bearbeitung mit einer Stollmaschine gemäß Schritt h) kann insbesondere die Weichheit und/oder Flexibilität des entstehenden Verbundmaterials erhöht werden.

Vorzugsweise kann das erfindungsgemäße Verfahren so ausgeführt werden, dass ein erfindungsgemäßes Verbundmaterial oder flächiges Erzeugnis herstellbar ist. Ferner kann das erfindungsgemäße Verbundmaterial und/oder flächige Erzeugnis gemäß so ausgebildet sein, dass es mit dem erfindungsgemäßen Verfahren erzeugt werden kann.

Es kann sein, dass dem Gemisch, insbesondere in Schritt d), ein Fällungsmittel, insbesondere Aluminiumsulfat oder andere Salze von mehrwertigen Kationen, wie Kalzium und Magnesium, zugeführt wird.

Zuvor und nachfolgend gemachte Gew.-% Angaben beziehen sich insbesondere auf Gew.-% der Referenzgröße, beispielsweise des Fasermaterials oder des Verbundmaterials, im getrockneten Zustand. Unter dem getrockneten Zustand ist insbesondere der Zustand des Verbundmaterials nach dem Trocknen zu verstehen, insbesondere mit dem zuvor beschriebenen Restwassergehalt. Alternativ können die Gew.-% Angaben auf sämtliche Bestandteile des Verbundmaterials, abgesehen von Wasser, vor deren Verarbeitung zu Verbundmaterial bezogen sein. So können bei einem Verbundmaterial, das ausschließlich aus Fasermaterial, Bindemittel, Aromaträger und Wasser besteht, Gewichtsangaben bezogen auf das Gesamtgewicht des Verbundmaterials insbesondere dahingehend verstanden werden, dass das Gesamtgewicht des Verbundmaterials aus der Summe des Gewichts des Fasermaterials, des Bindemittels und des Aromaträgers, also ohne den Wasseranteil, insbesondere ohne den zuvor beschriebenen Restwassergehalt, gebildet wird.

Im Folgenden soll die Erfindung unter Bezugnahme auf Ausführungsbeispiele im Detail beschrieben werden. Die Erfindung ist jedoch nicht auf diese Ausführungsbeispiele beschränkt, wobei einzelne Merkmale der Ausführungsbeispiele zusammen mit anderen Merkmalen oder Merkmalen der vorangehenden allgemeinen Offenbarung der Erfindung der Verwirklichung der Erfindung dienen können.

Beispiel:
Produktionsrückstände in Form von beschichtetem Papierverschnitt aus der Produktion von Papierbechern gemäß Gruppe 5.14.01 der DIN EN 643:2014 - 11 (BASF) wurden im trockenen Zustand unter Verwendung einer Schneidmühle zerkleinert, um ein entsprechendes Papierfasermaterial zu erhalten. 200 kg des zerkleinerten Papierfasermaterials wurden anschließend mit 200 kg Kaffeesatz als zusätzlich zum Fasermaterial vorliegender Aromaträger und 16.000 L Wasser in einer Bütte vermengt, um ein Mischverhältnis von Wasser zu Fasermaterial von 40/1 zu erhalten, und anschließend mittels eines Scheibenrefiners zu einem Faserbrei vermahlen.

Der so erhaltene Faserbrei wurde mit 138 kg Bindemittel (Latexaufbereitung, Full Ammonia Latex "Standard Malaysian/Vietnamese Rubber" 60% DRC gemäß ISO 2004 und 70 kg Aluminiumsulfat als Koagulationsmittel versetzt. Anschließend wurde der Faserbrei auf einer Langsiebentwässerungsmaschine entwässert und anschließend in einer Keilpressmaschine weiter entwässert. Anschließend wurde der Faserbrei in einem Trockenkanal unter Zufuhr von Warmluft bei 80°C getrocknet, bis ein wickelbares und stapelbares flächiges Erzeugnis mit einer Stärke von 1 mm bereitgestellt war. Das Erzeugnis konnte in Platten geschnitten und auf Rollen gewickelt werden. Außerdem konnte das Erzeugnis weiter veredelt werden, beispielsweise durch das Auftragen einer Farbschicht und das Prägen der Oberfläche sowie die Bearbeitung mit einer Stollmaschine.

Unter den Prüfbedingungen gemäß DIN 53121 (Biegewinkel 7°; Biegegeschwindigkeit 6,0 °/s; Vorkraft 0,02 N; Biegelänge 10,0 mm; Probenbreite 30,0 mm) wurde bei Beispiel 4 eine Biegekraft von 1200 mN gemessen. Des Weiteren wurde für Beispiel 4 bei einer Temperatur von 40°C und einer Luftfeuchtigkeit von 80% eine Wasserdampfspeicherfähigkeit von 8 bis 10 Gew.-%, insbesondere von 100 g/m² des Erzeugnisses, nachgewiesen.

Alternativ zu dem zuvor beschriebenen Beispiel kann ein erfindungsgemäßes Verbundmaterial wie für dieses beschrieben hergestellt werden, mit der einzigen Ausnahme, dass beispielsweise 400 kg Pressrückstände von Extraktionsrückständen in Form von Teeblättern, beispielsweise von grünem Tee, anstelle von 200 kg Papierfasermaterial und 200 kg Kaffeesatz, eingesetzt wird.

Vergleichsbeispiel:
Vegetabilleder, Aldehydfalzspäne und Chromfalzspäne wurden jeweils im trockenen Zustand zerkleinert, um ein entsprechendes Fasermaterial zu erhalten. Anschließend wurde 198 kg Fasermaterial aus Vegetabilleder, 79 kg Fasermaterial aus Aldehydfalzspänen, 467 kg aus Chromfalzspänen und 47 kg Lederfaserstoffschleifstaub (fällt beim Schleifen der Oberflächen von Lederfaserprodukten als Produktionsrückstand an) in einer Bütte mit 11000 L Wasser vermengt und anschließend mittels eines Scheibenrefiners zu einem Faserbrei vermahlen. Der so erhaltene Faserbrei wurde mit 38 kg schwarzen Farbpigmenten (Euronylschwarz HS 20192, Fa. Scholz), 580 kg Bindemittel (Latexaufbereitung, Full Ammonia Latex "Standard Malaysian/Vietnamese Rubber" 60% DRC gemäß ISO 2004), 142 kg Fettungsmittel (Polyol CT 688, Smit&Zoon) 119 kg vegitablem Gerbstoff (Quebracho-Extrakt, Otto Dille), 120 kg Aluminiumsulfat als Koagulationsmittel und 150 kg Blähgraphit als Flammschutzmittel (ES 250 B5, Kropfmühl) versetzt. Anschließend wurde der Faserbrei, wie für Beispiel 1 beschrieben, in ein flächiges Erzeugnis mit einer Stärke von 1 mm überführt.

Unter den Prüfbedingungen gemäß DIN 53121 (Biegewinkel 7°; Biegegeschwindigkeit 6,0 °/s; Vorkraft 0,02 N; Biegelänge 10,0 mm; Probenbreite 30,0 mm) wurde bei Vergleichsbeispiel 1 eine Biegekraft von 743 mN gemessen. Des Weiteren wurde für Vergleichsbeispiel 1 bei einer Temperatur von 40°C und einer Luftfeuchtigkeit von 80% eine Wasserdampfspeicherfähigkeit von 15 Gew.-% nachgewiesen.

Wie aus dem Vergleich des erfindungsgemäßen Beispiels mit dem Vergleichsbeispiel ersichtlich, können mit den erfindungsgemäßen Verbundmaterialien trotz des Einsatzes eines großen Anteils an pulverförmigem Aromaträger (etwa 30 Gew.-%), vergleichbare mechanische Eigenschaften, wie bei Verbundmaterialien ohne pulverförmigem Aromaträger und mit hohen Anteilen an Lederfasern, erzielt werden. Auch wenn die gemessene Biegekraft bei dem erfindungsgemäßen Beispiel etwas höher und die Wasserdampfspeicherfähigkeit etwas geringer ist als bei dem Vergleichsbeispiel haben sich die erzielten Werte als ausreichend für die zuvor beschriebenen Einsatzgebiete erwiesen. Insbesondere wurde gezeigt, dass mit den erfindungsgemäßen Verbundmaterialien wickelbare Erzeugnisse hergestellt werden können, die, wie Verbundmaterialien mit Lederfasern, effizient gelagert, transportiert und weiterverarbeitet werden können. Insbesondere konnten die Erzeugnisse dank der hervorragenden Biegsamkeit ohne Bruchgefahr und/oder großen Kraftaufwand auf Rollen mit relativ kleinen Wickelkernen, insbesondere mit einem Durchmesser von 72 mm, gewickelt werden. Dadurch kann der lager- und transportkostenintensive Einsatz von Rollen mit einem großen Durchmesser, beispielsweise von 200 mm, viermieden werden. Darüber hinaus hat sich die erzielte Biegsamkeit insbesondere für den Einsatz als Beschichtung, Belag und Überzugsmaterial als zufriedenstellend herausgestellt.

Somit konnte ein Verbundmaterial bereitgestellt werden, das durch den Einsatz von Aromaträgern die Aufmerksamkeit von Personen auf daraus hergestellte Erzeugnisse lenkt, ohne die mechanischen Eigenschaften des Verbundmaterials Wesentlich zu beeinträchtigen.

Ferner wiesen die gemäß dem erfindungsgemäßen Beispielen 1 hergestellten Verbundmaterialien ein nicht-thermoplastisches Verhalten auf, waren insbesondere durch Erhitzen nach dem Trocknen nicht besser verformbar. Zudem erwiesen sich die so hergestellten Verbundstoffe als sehr emissionsarm im Hinblick auf verschiedene Tests, etwa Gesamtemission nach VDA 277 oder VDA 278; Fog-Wert, Gesamtemission nach AgBB/DIN EN ISO 16000; und TVOC 3d (total volatile organic compound; 3 Tage) Emission. Sowohl das nicht-thermoplastische Verhalten als auch die geringe Emission konnten besonders ausgeprägt gegenüber solchen Verbundmaterialien beobachtet werden, in denen aus dem Stand der Technik bekannte Styrol-Aciylat-basierte Bindemittel, etwa der Acronal-Reihe, BASF, verwendet wurden.

Die in der vorstehenden Beschreibung und den Ansprüchen offenbarten Merkmale können sowohl einzeln als auch in beliebiger Kombination für die Realisierung der Erfindung in den verschiedenen Ausgestaltungen von Bedeutung sein.

## Patentansprüche

1. Verbundmaterial, umfassend ein Fasermaterial und ein Bindemittel, **dadurch gekennzeichnet, dass** das Fasermaterial einen faserförmigen Aromaträger aufweist und/oder dass das Verbundmaterial zusätzlich zum Fasermaterial einen Aromaträger aufweist.

2. Verbundmaterial nach Anspruch 1, wobei der Aromaträger aus Pflanzen, insbesondere aus Samen, Gewürzen, Früchten, Blüten und/oder Gemüse, gewonnenes Trägermaterial, insbesondere Kaffeepulver, aufweist.

3. Verbundmaterial nach Anspruch 1 oder 2, wobei der Aromaträger Pressrückstände, Extraktionsrückstände und/oder Destillationsrückstände, insbesondere Kaffeesatz, aufweist.

4. Verbundmaterial nach einem der vorstehenden Ansprüche, wobei der zusätzlich zum Fasermaterial vorliegende Aromaträger ein ätherisches Öl aufweist, insbesondere daraus besteht.

5. Verbundmaterial nach einem der vorstehenden Ansprüche, wobei der Anteil des Fasermaterials wenigstens 20 Gew.-%, vorzugsweise wenigstens 30 Gew.-%, besonders bevorzugt wenigstens 40 Gew.-%, bezogen auf das Gesamtgewicht des Verbundmaterials, beträgt, und/oder wobei der Anteil des Bindemittels 5 bis 60 Gew.-%, vorzugsweise 10 bis 50 Gew.-%, besonders bevorzugt 20 bis 35 Gew.-%, bezogen auf das Gesamtgewicht des Verbundmaterials, beträgt.

6. Verbundmaterial nach einem der vorstehenden Ansprüche, wobei der Anteil des zusätzlich zum Fasermaterial vorliegenden Aromaträgers zwischen 5 und 60 Gew.-%, vorzugsweise zwischen 10 und 50 Gew.-%, besonders bevorzugt zwischen 20 und 40 Gew.-%, bezogen auf das Gesamtgewicht des Verbundmaterials, beträgt, und/oder wobei das Gewichtsverhältnis von dem Fasermaterial zu dem zusätzlich zum Fasermaterial vorliegendem Aromaträger zwischen 2:1 und 1:2, vorzugsweise zwischen 1,8:1 und 1:1,8, besonders bevorzugt zwischen 1,5:1 und 1:1,5, 1,3:1 und 1:1,3 oder 1,1:1 und 1:1,1, beträgt.

7. Verbundmaterial nach einem der Ansprüche 1 bis 5, wobei der Anteil des faserförmigen Aromaträgers wenigstens 20 Gew.- %, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Fasermaterials, beträgt, und/oder wobei der Anteil des Fasermaterials 20 bis 80 Gew.-%, vorzugsweise 25 bis 70 Gew.-%, besonders bevorzugt 30 bis 60 Gew.-% oder 30 bis 50 Gew.-%, bezogen auf das Gesamtgewicht des Verbundmaterials, beträgt.

8. Verbundmaterial nach einem der vorstehenden Ansprüche, wobei der zusätzlich zum Fasermaterial vorliegende Aromaträger einen pulverförmigen Aromaträger, insbesondere Kaffeesatz, aufweist.

9. Verbundmaterial nach einem der vorstehenden Ansprüche, wobei das Fasermaterial ausgewählt ist aus der Gruppe bestehend aus Papierfasermaterial und/oder Holzfasermaterial.

10. Verbundmaterial nach einem der vorangehenden Ansprüche, wobei das Verbundmaterial ferner zumindest ein Additiv umfasst, vorzugsweise ausgewählt aus der Gruppe, bestehend aus einem anorganischen Salz, einem Farbmittel, einem Gleitmittel, einem Weichmacher, Flammschutzmittel, insbesondere einem halogen-, bor- und antimonfreien Flammschutzmittel, einem Fettungsmittel, einem Gerbstoff, einem Nachgerbstoff, einem Flockungsmittel, einem Fixiermittel, einem Entwässerungshilfsmittel, einem Nassfestmittel, einem Füllstoff und Mischungen von zwei oder mehr davon.

11. Flächiges, insbesondere bahnförmiges, Erzeugnis umfassend das Verbundmaterial nach einem der vorangehenden Ansprüche, insbesondere wobei das Erzeugnis auf eine Rolle gewickelt oder in Platten zugeschnitten ist.

12. Erzeugnis nach Anspruch 11, das von dem Aromaträger durchsetzt ist, insbesondere gleichmäßig durchsetzt ist.

13. Verwendung des Verbundmaterials nach einem der Ansprüche 1 bis 10 oder des Erzeugnisses nach einem der Ansprüche 11 bis 12, zur
- Beschichtung, insbesondere Ummantelung oder Kaschierung, insbesondere von
- Paneelen, wie Wandpaneelen, Bodenpaneelen, Deckenpaneelen oder Fensterrahmenpaneelen, insbesondere im Bereich von Fahrzeuginnenräumen, Wohnräumen und Gewerberäumen, oder von
- Einrichtungs- und Gebrauchsgegenständen, wie Möbeln, Dekorationen, Elektrogeräten und Handtaschen, insbesondere in der Modeindustrie, und/oder
- zur Herstellung von
- Belägen, wie Wandbelägen, insbesondere Tapeten, Bodenbelägen, Deckenbelägen, Fensterbelägen oder Türseitenverkleidungen insbesondere im Bereich von Fahrzeuginnenräumen, Wohnräumen und Gewerberäumen, von
- Wandelementen, wie Raumtrennern, insbesondere im Bereich von Fahrzeuginnenräumen, Wohnräumen und Gewerberäumen, von
- Überzugsmaterial, wie Kissenbezüge, Sitzbezüge oder Abdeckungen, insbesondere von Sitzrückenschalen, insbesondere im Fahrzeuginnenbereich, von
- Schuhkomponenten, insbesondere Hinterkappen, Absätzen, Lauf- und Brandsohlen, und/oder
- von Modeaccessoires, Produkte zur Ausstattung von Verkehrsmitteln oder Bauprodukten.

14. Verfahren zum Herstellen eines, insbesondere nach einem der Ansprüche 1 bis 10 ausgebildeten, Verbundmaterials oder eines, insbesondere nach einem der Ansprüche 11 bis 12 ausgebildeten, flächigen Erzeugnis, umfassend die Schritte:
a) Bereitstellen eines Fasermaterials, das Pflanzenfasermaterial umfasst;
b) Bereitstellen eines Aromaträgers,
c) Bereitstellen eines Bindemittels;
d) Vermengen des Bindemittels, des Fasermaterials und eines Fluids, insbesondere Wasser, zu einem Gemisch, insbesondere Faserbrei; und
e) Trocknen des Gemisches, um das Verbundmetarial zu erhalten;
wobei der Aromaträger in Schritt d) mit in das Gemisch vermengt wird und/oder während oder nach dem Schritt e) auf das Verbundmaterial aufgetragen wird.

15. Verfahren nach Anspruch 14, wobei der Aromaträger ein ätherisches Öl, Pressrückstände, Extraktionsrückstände und/oder Destillationsrückstände, insbesondere Kaffeesatz, aufweist.
